(19) Europäisches Patentamt / European Patent Office / Office européen des brevets

(11) **EP 4 598 173 A1**

(12) **EUROPEAN PATENT APPLICATION**
published in accordance with Art. 153(4) EPC

(43) Date of publication:
06.08.2025 Bulletin 2025/32

(21) Application number: 23873010.5

(22) Date of filing: 25.09.2023

(51) International Patent Classification (IPC):
H04W 72/02 (2009.01)      H04W 72/20 (2023.01)
H04W 72/54 (2023.01)      H04W 16/14 (2009.01)
H04W 74/08 (2024.01)      H04W 4/40 (2018.01)
H04W 92/18 (2009.01)

(52) Cooperative Patent Classification (CPC):
H04W 4/40; H04W 16/14; H04W 72/02;
H04W 72/20; H04W 72/54; H04W 74/08;
H04W 92/18

(86) International application number:
PCT/KR2023/014629

(87) International publication number:
WO 2024/071893 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.09.2022 KR 20220123636
22.09.2023 KR 20230127174

(71) Applicant: Innovative Technology Lab Co., Ltd.
Seocho-gu, Seoul 06744 (KR)

(72) Inventors:
• LEE, Won Seok
  Seoul 06744 (KR)
• PARK, Dong Hyun
  Seoul 06744 (KR)

(74) Representative: Diehl & Partner
Patent- und Rechtsanwaltskanzlei mbB
Erika-Mann-Straße 9
80636 München (DE)

(54) **METHOD AND APPARATUS FOR PERFORMING SIDELINK COMMUNICATION IN UNLICENSED BAND**

(57) A method of performing, by a user equipment (UE), sidelink communication based on an unlicensed band in a wireless communication system may include receiving, by the UE, sidelink resource pool configuration information from a base station based on higher layer signaling, generating a sidelink (SL) grant if data is generated in a logical channel (LCH) based on the sidelink resource pool configuration information, selecting a sidelink resource pool depending on whether hybrid automatic repeat and request (HARQ) feedback is configured to the data that is generated in the LCH based on the sidelink resource pool configuration information, and selecting a sidelink resource from the selected sidelink resource pool, and performing sidelink transmission.

**FIG. 18**

**Description**

TECHNICAL FIELD

The present disclosure relates to a method and apparatus for performing sidelink communication in an unlicensed band in a wireless communication system.

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to a long term evolution (LTE)-based/New Radio (NR) based communication between vehicles, vehicle-to-pedestrian (V2P), which may refer to LTE-based/NR-based communication between a vehicle and a user equipment (UE) carried by a user, and a vehicle-to-infrastructure/network (V2I/N), which may refer to a LTE-based/NR-based communication between a vehicle and a roadside unit (RSU)/network. The RSU may be a transportation infrastructure entity configured by a base station or a fixed UE, such as, an entity that transmits a speed notification to a vehicle.

DETAILED DESCRIPTION

TECHNICAL SUBJECT

A technical subject of the present disclosure relates to a method and apparatus for performing sidelink (SL) communication in a wireless communication system.

A technical subject of the present disclosure relates to a method and apparatus for configuring an SL resource pool in an unlicensed band.

A technical subject of the present disclosure relates to a method and apparatus for selecting an SL resource pool configured in an unlicensed band based on listen before talk (LBT) results.

A technical subject of the present disclosure relates to a method and apparatus for selecting an SL resource pool configured in an unlicensed band based on an LBT counter.

A technical subject of the present disclosure relates to a method and apparatus for selecting an SL resource pool configured in an unlicensed band based on a channel busy ratio (CBR).

A technical subject of the present disclosure relates to a method and apparatus for selecting a specific transmission opportunity based on a candidate transmission opportunity in a resource pool including a plurality of LBT bandwidths.

A technical subject of the present disclosure relates to a method and apparatus for controlling a minimum time gap between transmission opportunities by considering a maximum channel occupation time (MCOT) in an unlicensed band.

Technical subjects to be achieved by the present disclosure are not limited to the aforementioned technical subjects and still other technical subjects not described may be clearly understood by one of ordinary skill in the art to which the present disclosure pertains from the following description.

TECHNICAL SOLUTION

According to an aspect of the present disclosure, a method of performing, by a user equipment (UE), sidelink communication based on an unlicensed band in a wireless communication system may include receiving, by the UE, sidelink resource pool configuration information from a base station based on higher layer signaling; generating a sidelink (SL) grant if data is generated in a logical channel (LCH) based on the sidelink resource pool configuration information; selecting a sidelink resource pool depending on whether hybrid automatic repeat and request (HARQ) feedback is configured to the data that is generated in the LCH based on the sidelink resource pool configuration information; and selecting a sidelink resource from the selected sidelink resource pool, and performing sidelink transmission, wherein the UE performs a listen before talk (LBT) operation of the unlicensed band in the process of selecting the sidelink resource pool, and performs the sidelink resource pool selection based on at least one of LBT results, an LBT failure counter, and a channel busy ratio (CBR).

Also, according to an aspect of the present disclosure, when the HARQ feedback is configured to the UE, the UE may select the sidelink resource pool from among one or more sidelink resource pools in which a physical sidelink feedback channel (PSFCH) is configured, and when the HARQ feedback is not configured to the UE, the UE may select the sidelink resource pool from among the one or more sidelink resource pools regardless of whether the PSFCH is configured.

Also, according to an aspect of the present disclosure, the UE may select the resource pool from among one or more resource pools included in an LBT bandwidth in which LBT is successful, based on the LBT results.

Also, according to an aspect of the present disclosure, the UE may select the resource pool from among the one or more resource pools included in an LBT bandwidth in which an LBT counter is less than a preset value based on the LBT counter.

Also, according to an aspect of the present disclosure, when a first sidelink resource pool that includes a plurality of LBT bandwidths is configured to the UE, at least one candidate transmission opportunity may be configured in the first sidelink resource pool that includes the plurality of LBT bandwidths, based on each LBT bandwidth, and when the first sidelink resource pool is selected based on at least one of the LBT results, the LBT failure counter, and the CBR, the UE may select a first transmission opportunity from among the one or more candidate transmission opportunities within the first sidelink resource pool based on at least one of the LBT results, the LBT failure counter, and the CBR.

## EFFECT

According to the present disclosure, it is possible to perform sidelink (SL) communication in a wireless communication system.

According to the present disclosure, it is possible to provide a method of configuring an SL resource pool in an unlicensed band.

According to the present disclosure, it is possible to provide a method of selecting an SL resource pool configured in an unlicensed band based on listen before talk (LBT) results.

According to the present disclosure, it is possible to provide a method of selecting an SL resource pool configured in an unlicensed band based on an LBT counter.

According to the present disclosure, it is possible to provide a method of selecting an SL resource pool configured in an unlicensed band based on a channel busy ratio (CBR).

According to the present disclosure, it is possible to provide a method of selecting a specific transmission opportunity based on a candidate transmission opportunity in a resource pool including a plurality of LBT bandwidths.

According to the present disclosure, it is possible to provide a method of controlling a minimum time gap between transmission opportunities by considering a maximum channel occupation time (MCOT) in an unlicensed band.

Effects to be achieved by the present disclosure are not limited to the aforementioned effects and still other technical effects not described may be clearly understood by one of ordinary skill in the art to which the present disclosure pertains from the following description.

## BRIEF DESCRIPTION OF DRAWINGS

FIG. 1 illustrates an example of describing a new radio (NR) frame structure to which the present disclosure may apply.
FIG. 2 illustrates an NR resource structure to which the present disclosure may apply.
FIG. 3 illustrates an NR sidelink slot structure to which the present disclosure may apply.
FIG. 4 illustrates an NR sidelink frequency to which the present disclosure may apply.
FIG. 5 illustrates an NR sidelink resource pool configuration to which the present disclosure may apply.
FIG. 6 illustrates an unlicensed band for each region for NR sidelink communication to which the present disclosure may apply.
FIG. 7 illustrates use of a 5 gigahertz (GHz) unlicensed band to which the present disclosure may apply.
FIG. 8 illustrates a method of increasing a bandwidth in consideration of a power spectral density (PSD) limitation to which the present disclosure may apply.

FIG. 9 illustrates a method of configuring a guard band in consideration of a shared band within an intra-cell to which the present disclosure may apply.

FIG. 10 illustrates an unlicensed band applicable to the present disclosure.

FIG. 11 illustrates a sidelink resource pool to which the present disclosure may apply.

FIG. 12 illustrates a method of a UE that operates based on sidelink resource assignment mode 2, applicable to the present disclosure.

FIG. 13 illustrates a sidelink hybrid automatic repeat and request (HARQ) entity operation method applicable to the present disclosure.

FIG. 14 illustrates a sidelink process applicable to the present disclosure.

FIG. 15 illustrates a sidelink resource pool configured in a single unlicensed band, applicable to the present disclosure.

FIG. 16 illustrates a sidelink bandwidth part (SL BWP) configuration that operates in wide-band.

FIG. 17 illustrates a resource pool selection procedure applicable to the present disclosure.

FIG. 18 illustrates a method of performing, by a UE, resource selection in consideration of LBT results, applicable to the present disclosure.

FIG. 19 illustrates a method of selecting a resource pool based on an LBT failure counter, applicable to the present disclosure.

FIG. 20 illustrates a method of performing, by a UE, resource selection in consideration of an LBT counter, applicable to the present disclosure.

FIG. 21 illustrates a method of generating a sidelink grant and selecting a resource based on a channel busy ratio (CBR), applicable to the present disclosure.

FIG. 22 illustrates a CBR window in a sidelink unlicensed band, applicable to the present disclosure.

FIG. 23 illustrates a resource pool configuration in an SL BWP, applicable to the present disclosure.

FIG. 24 illustrates a method of performing, by a UE, resource selection in consideration of an LBT counter, applicable to the present disclosure.

FIG. 25 illustrates a sidelink operation applicable to the present disclosure.

FIG. 26 illustrates an SL BWP that includes a plurality of resource block (RB) sets.

FIG. 27 illustrates a method of selecting a transmission opportunity based on a candidate transmission opportunity, applicable to the present disclosure.

FIG. 28 illustrates a method of determining a transmission opportunity based on an LBT operation, applicable to the present disclosure.

FIG. 29 illustrates a case in which a minimum time gap is guaranteed in a transmission opportunity, applicable to the present disclosure.

FIG. 30 illustrates a method of determining a transmission opportunity using consecutive slots in an unlicensed band, applicable to the present disclosure.

FIG. 31 is a flowchart illustrating a method of performing, by a UE, sidelink communication to which the present disclosure may apply.

FIG. 32 is a flowchart illustrating a method of performing, by a UE, sidelink communication to which the present disclosure may apply.

FIG. 33 is a diagram illustrating a base station device and a terminal device to which the present disclosure may apply.

## BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

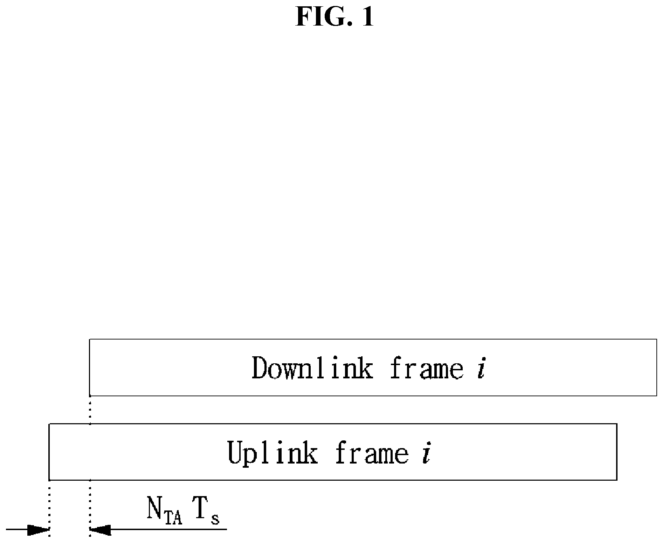

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k = T_s/T_c = 64$.

Referring to FIG. 1, a time structure of a frame for a downlink/uplink (DL/UL) transmission may include $T_f = (\Delta f_{max}N_f/100) \cdot T_s = 10ms$. Here, a single frame may include 10 subframes corresponding to $T_{sf} = (\Delta f_{max}N_f/1000) \cdot T_s = 1ms$. A number of consecutive orthogonal frequency division multiplexing (OFDM) symbols per subframe may be

$$N_{symb}^{subframe,\mu} = N_{symb}^{slot} \cdot N_{slot}^{subframe,\mu}$$

. Also, each frame may be divided into two half frames and the half frames may include 0 to 4 subframes and 5 to 9 subframes. Here, the half frame 1 may include 0 to 4 subframes and the half frame 2 may include 5 to 9 subframes.

The $N_{TA}$ represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left(N_{TA} + N_{TA,offset}\right)T_c$$

The $N_{TA,offset}$ denotes a TA offset value occurring due to a duplex mode difference and the like. Basically, in a frequency division duplex (FDD), $N_{TA,offset}$=0. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, $N_{TA,offset}$ may be $39936T_C$ or $2600T_C$. $39936T_C$=20.327μs and $25600T_C$=13.030μs. Also, in FR2 (Frequency Range 2) which is millimeter wave (mmWave), the $N_{TA,offset}$ may be $13792T_C$. At this time, $13792T_C$ = 7.020 μs.

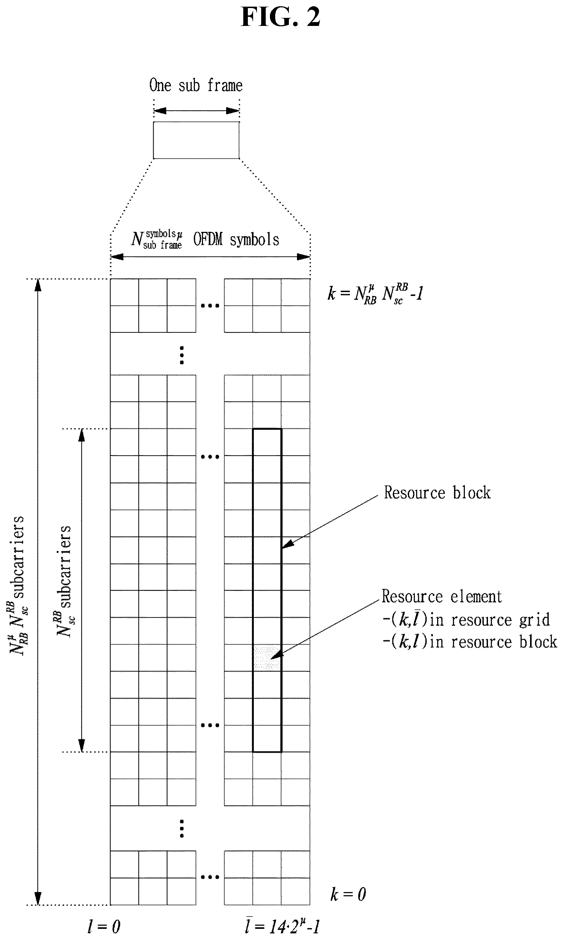

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, the $N^{RB}{}_{sc}$ represents the number of subcarriers per one RB and k represents the subcarrier index.

[Equation 2]

$$n_{PRB} = \left\lfloor \frac{k}{N_{sc}^{RB}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu$ = 2 and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu = 1$ and 2 may be used in the unlicensed band of 6 GHz or less and an SCS corresponding to $\mu = 3$ and 4 may be used in the unlicensed band above 6 GHz. Here, for example, if $\mu = 4$, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu = 2$ and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480 kHz may not be considered in Table 4, the present disclosure is not limited to such examples.

[Table 4]

| SCS | slots in 10ms | slots in 10ms | symbols in 10 ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |

(continued)

| SCS | slots in 10ms | slots in 10ms | symbols in 10 ms |
|---|---|---|---|
| 480 kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.

For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| |
|---|
| **Vehicles Platooning**<br>Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor**<br>Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |
| **Advanced Driving**<br>Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too. |
| **Remote Driving**<br>Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

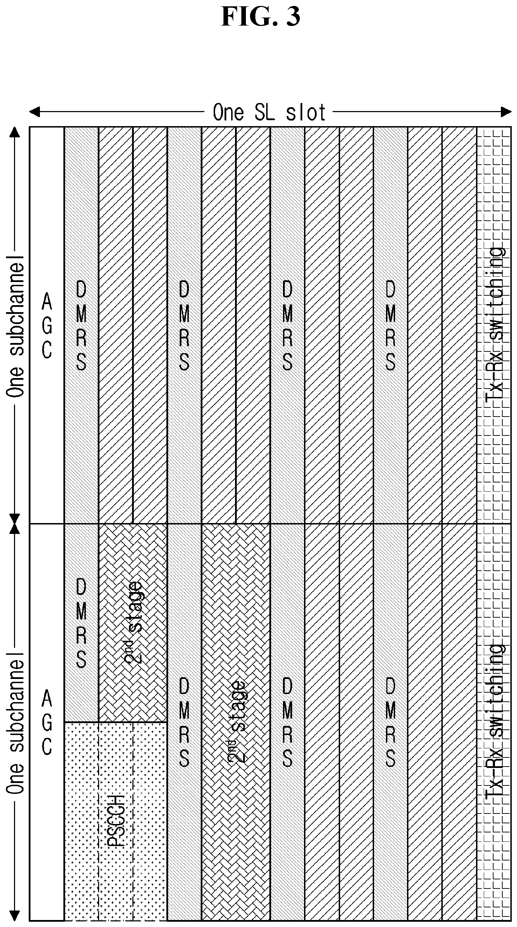

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

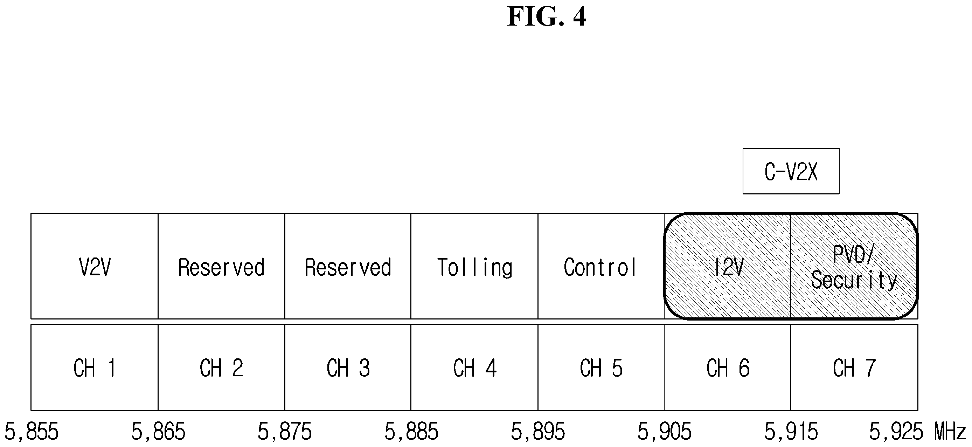

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| |
|---|
| - Delay:[3, 100ms] <br> - Reliability :[90%, 99.999%] <br> - Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |

(continued)

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 82 | Delay Critical GBR (NOTE 1) | 3 | 10 ms | $10^{-4}$ | 2000 bytes | 2000 ms | Cooperative collision avoidance; Sensor sharing- Higher degree of automation; Video sharing- higher degree of automation |
| 83 | | 2 | 3 ms | $10^{-5}$ | 2000 bytes | 2000 ms | Emergency trajectory alignment; Sensor sharing- Higher degree of automation |
| •NOTE 1: GBR and Delay Critical GBR PQIs can only be used for unicast PC5 communications. | | | | | | | |
| | | | | Editor's note: It is FFS if GBR and Delay Critical GBR can also be used for broadcast and groupcast. | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, a SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within the base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-SSB) may be defined independently for each frequency range, which may be similar to NR-Uu.

[Table 8]

|  | FR 1 | FR2 |
|---|---|---|
| PSSCH/PSCCH and PSFCH | Normal CP for 15 kHz, 30 kHz, 60 kHz<br>- Extended CP for 60 kHz | Normal CP for 60 kHz, 120 kHz,<br>- Extended CP for 60 kHz |
| note | No support of DFT-S-OFDM for NR SL in Rel-16 | |

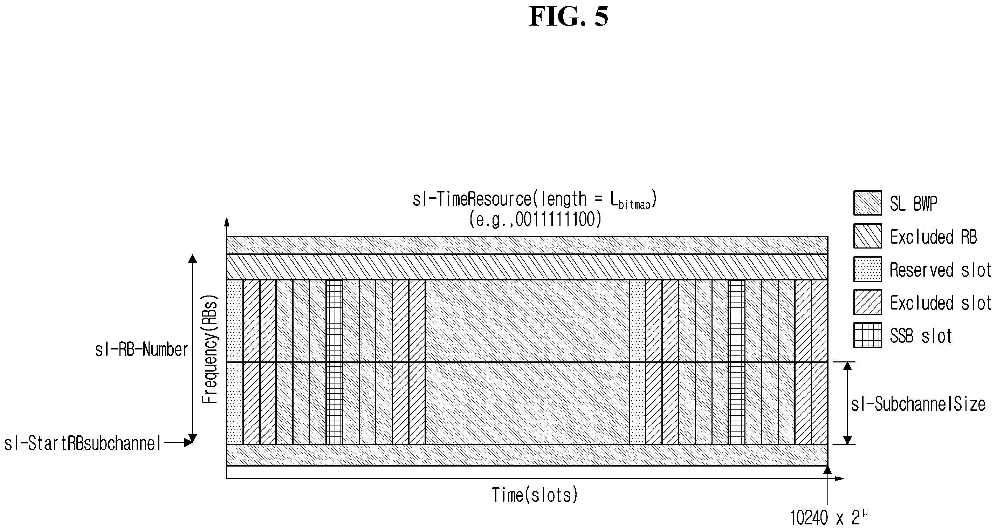

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

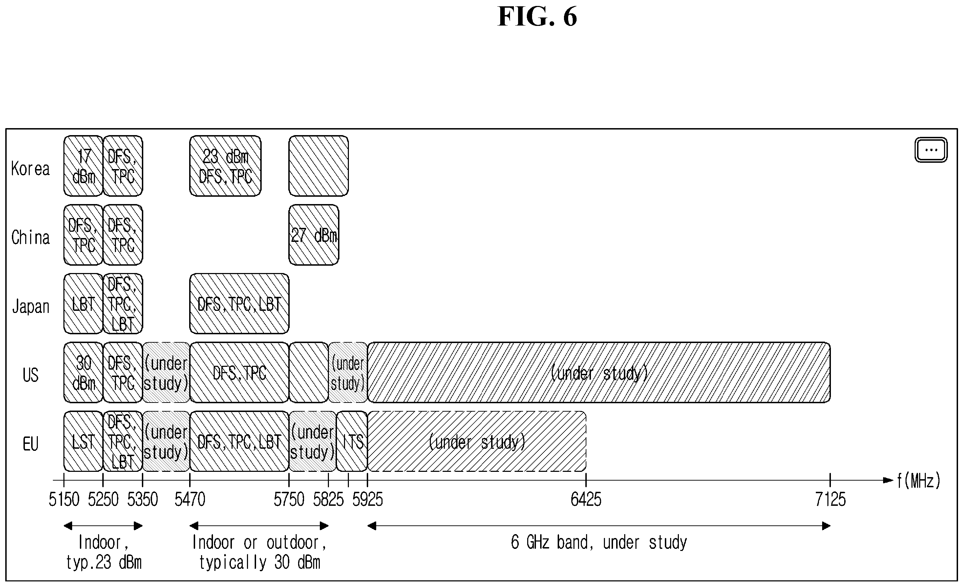

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 3550-3700 MHz) may be defined as a citizens broadband radio service (CBRS), but may not be limited thereto.

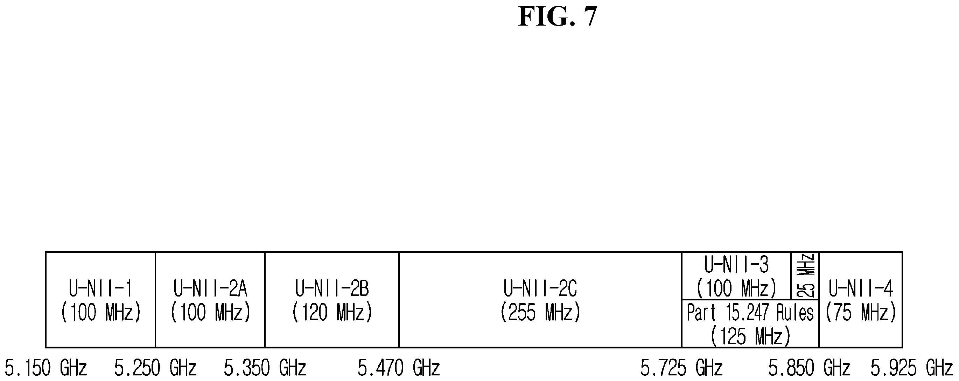

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

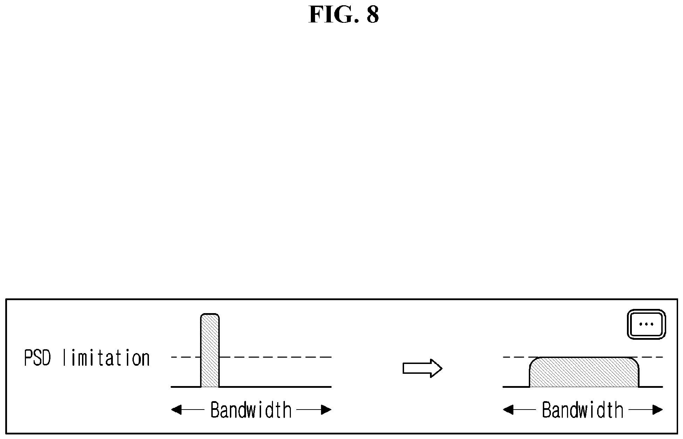

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

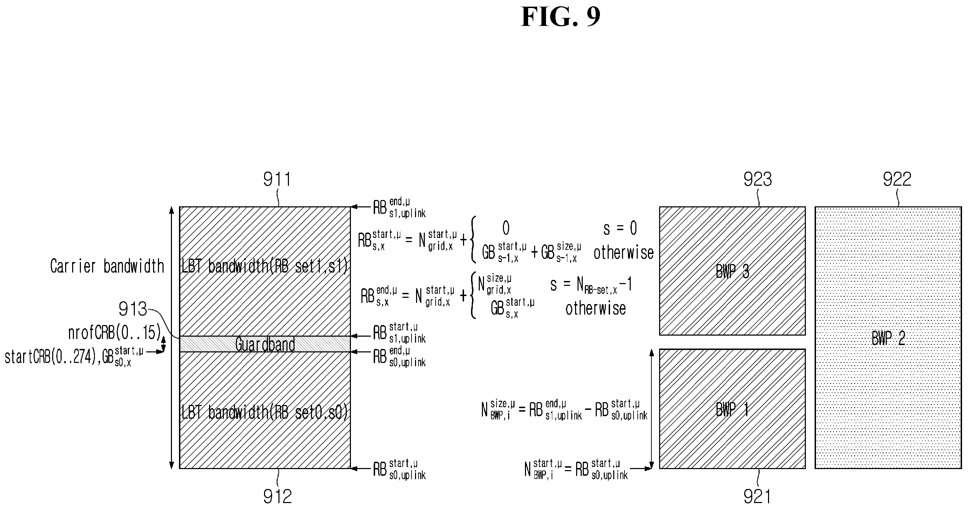

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{\text{RB-set},x}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency.

Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, $s \in \{0,1, ..., N_{\text{RB-set},x} - 2\}$, $N_{\text{RB-set},x}$ denotes the number of RB sets, and x may be configured as DL or UL for downlink and uplink. $N_{\text{RB-set},x}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 922 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB_{s,x}^{\text{start},\mu}$, and the end CRB may be $RB_{s,x}^{\text{end},\mu}$. Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N_{\text{grid},x}^{\text{size},\mu}$.

Here, the start CRB and the end CRB for each RBS (911, 912) may be determined based on RBS index s, and RBS index s may be $s \in \{0,1, ..., N_{\text{RB-set},x} - 1\}$. That is, RBS index s may be a resource block with a size of $RB_{s,x}^{\text{size},\mu}$, and $RB_{s,x}^{\text{size},\mu}$ denotes the number of CRBs determined through the start CRB and the end CRB based on Equation 3 below. Also, in each RBS, the start CRB and the end CRB may be as shown in Equation 4 and Equation 5 below.

[Equation 3]

$$RB_{s,x}^{\text{size},\mu} = RB_{s,x}^{\text{end},\mu} - RB_{s,x}^{\text{start},\mu} + 1$$

[Equation 4]

$$RB_{s,x}^{\text{start},\mu} = N_{\text{grid},x}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

[Equation 5]

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N_{\text{grid},x}^{\text{size},\mu}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 913. A location of each of the two RBSs 911 and 913 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

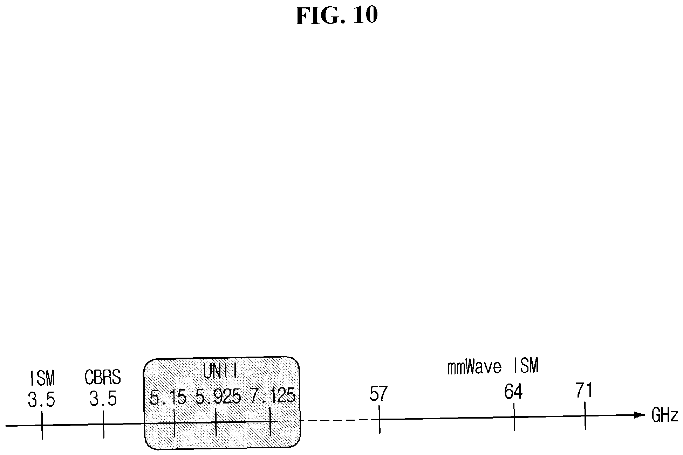

FIG. 10 illustrates an unlicensed band applicable to the present disclosure. Referring to FIG. 10, an NR-U band that is an unlicensed band of a wireless communication system (e.g., NR) may include two frequency ranges, a low frequency band of 7 GHz or less and a high frequency band of 60 GHz. However, it is only an example and may not be limited thereto. For example, in FIG. 10, the band of 2.4 GHz may be used for industrial scientific medical (ISM), the band of 3.5 GHz may be used for citizens broadband radio services (CBRS), and the band of 5 GHz to 6 GHz may be used for an unlicensed national information infrastructure (UNII). The UNII (5.925 GHz to 7.125 GHz) band may include a plurality of bands (UNII-1, UNII-2, ..., UNII-8). For each of the plurality of bands (UNII-1, UNII-2, ..., UNII-8) within the UNII, different transmission power, indoor/outdoor operation, maximum power effective isotropic radiated power (EIRP), and dynamic frequency selection (DFS) requirements may be determined, but it may not be limited to a specific form.

The band of 5 GHz to 6 GHz may be divided into non-overlapping 20 MHz channel bandwidths. Here, channels with wide bandwidths, such as 40 MHz, 80 MHz, and 160 MHz, may be configured based on boundaries. For example, A portion of 6 GHz band may coexist with a system using backhaul communication (UNII-5, UNII-7), satellite (UNII-5), broadcasting (UNII-6, UNII-8), and a ultra -wide band (UWB) system (UNII-6). The number of channels in the UNII-5 band (5.925 to 6.425 GHz) may be 24, 12, 6, and 4 at 20 MHz, 40 MHz, 80 MHz, and 160 MHz, respectively. Also, the UNII-5 band (5.925 to 6.425 GHz) may be used outside indoor and protected areas. Here, indoors may be determined as EIRP 30 dBm (AP) and 24 dBM (UE), and outdoors may be determined as EIRP 36 dBm (AP) and 30 dBM (UE), but they may not be limited to specific forms.

A channel described below may be a portion of a single carrier or a plurality of consecutive resource blocks (RBs) within the carrier. For example, a channel access procedure may be a procedure of verifying a channel based on sensing to perform transmission. In the case of performing the channel access procedure, the base station or the UE may perform energy detection based on a slot unit, and may determine that the channel is in an idle state if it is less than or equal to a preset value. In the following, a method of operating in the unlicensed band based on the aforementioned operation is described.

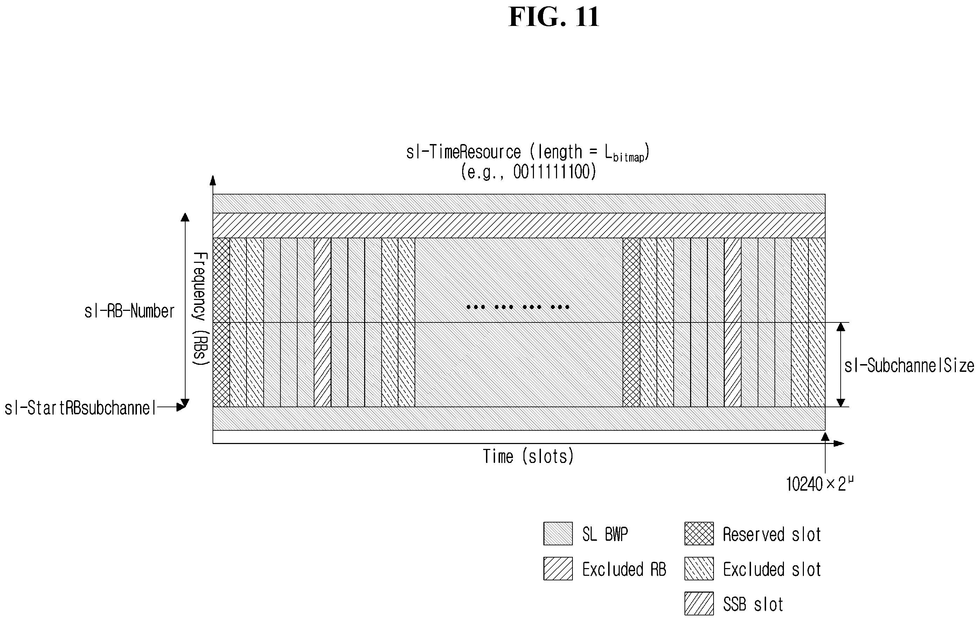

FIG. 11 illustrates a sidelink resource pool to which the present disclosure may apply. Referring to FIG. 11, a plurality of Tx resource pools (RPs) and Rx RPs may be configured to the UE. The resource pool may be identified by an identifier/identification (ID) and added to or removed from the UE. Also, for example, each resource pool configuration may be different. In detail, PSCCH, PSSCH and PSFCH configuration of the resource pool may be different for each resource pool. Also, the resource pool may be configured with a start location of a subchannel indicating a location of a resource, the number of RBs, and a subchannel size in terms of frequency within a sidelink bandwidth part (SL BWP). Also, in the resource pool, locations of time resources may be configured in a bitmap format. Here, time resources may be mapped except for slots used in SSB and uplink, and may be repeatedly applied for each bit configured within a system frame number (SFN).

In detail, for example, referring to FIG. 11, the UE may determine a resource location in a specific resource pool within the SL BWP. The subchannel size may represent a physical resource block (PRB) as a minimum unit that selects resources. Also, "sl-StartRBsubchannel" may denote a start RB of a subchannel within the SL BWP, "sl-RB-Number" may denote the number of RBs available within the SL BWP, and "sl-SubchannelSize" may denote a size of a single subchannel. The UE may determine the number of subchannels to be used within the SL BWP based on the aforementioned parameters. Also, for example, time axis resources may be indicated in slot units through "sl-TimeResource." In detail, for example, when the UE receives indication of "0011111100" as a 10-bit indicator, the UE may use resources of a slot indicating 1, excluding a slot that includes a reserved slot SSB. Also, the UE may not use a slot that is not included in the aforementioned subchannel RB within the SL BWP, or that is indicated with 0 in "sl-TimeResource." Also, for example, up to 4 SL BWPs may be configured, and one of the configured BWPs may be activated and used. Also, within the SL BWP, up to eight Tx resource pools may be configured and up to 16 Rx resource pools may be configured, which is not limited to a specific embodiment.

Sidelink communication may be performed based on the above in the unlicensed band and, based on this, an LBT operation may be performed. That is, the UE may verify whether the channel is being used before transmitting a signal in the unlicensed band and may transmit the signal if it is verified that the channel is in an idle state. For example, a method of selecting, by the UE, a transmission (or retransmission) resource from the resource pool is described below.

For example, the UE may perform transmission through a sidelink shared channel (SL-SCH). In detail, the UE may receive a sidelink grant through at least one of physical downlink control channel (PDCCH) reception and radio resource control (RRC). When the UE receives a PDCCH that is scrambled with a sidelink configured scheduling-radio network temporary identifier (SLCS-RNTI) and in which a new data indicator (NDI) indicates 1, the UE may determine that a dynamic sidelink grant is received, and may perform based on this. For example, the SLCS-RNTI may be an identifier that indicates configured scheduling of sidelink communication, and if the UE receives SLCS-RNTI scrambled DCI, the UE may perform sidelink communication based on preconfigured scheduling. As another example, the UE may automatically generate a sidelink grant in a MAC layer of the UE. That is, the MAC layer of the UE may have a sidelink grant to determine PSCCH and PSSCH duration in the activated SL BWP.

In detail, for example, when sidelink resource allocation mode 1 is configured to the UE, the UE may perform an operation based on a grant received in a PDCCH occasion. For example, the sidelink resource assignment mode 1 may be a mode in which sidelink resources are scheduled by the base station. The base station may schedule sidelink resources to the UE through DCI of the PDCCH, and the UE may perform sidelink communication with another UE through a resource indicated by the base station. For example, the UE may receive SL-RNTI-scrambled DCI. Here, an NDI included in DCI may not be toggled and if the NDI is not togged, it may indicate retransmission. If the NDI included in DCI is not toggled, the UE may determine the PSCCH and PSSCH duration in which at least one retransmission related to a single MAC protocol data unit (PDU) is to be performed through the received sidelink grant.

On the other hand, if the NDI included in DCI is toggled (i.e., in the case of performing new transmission), the UE may determine the PSCCH and PSSCH duration in which a single MAC PDU-related transmission is to be performed through the received sidelink grant. Also, if retransmission resources are configured to the UE, the UE may also determine a resource to perform a single MAC PDU retransmission. For example, when the UE receives a retransmission sidelink grant for a MAC PDU for which ACK is received, the UE may remove the PSCCH and PSSCH duration configured to perform a MAC PDU retransmission.

As another example, the UE may receive SLCS-RNTI-scrambled DCI. Here, when a DCI-activated configured sidelink grant (CG) indicates retransmission for specific HARQ process ID, the UE may determine the PSCCH and PSSCH duration for single MAC PDU transmission. As another example, when DCI indicates deactivation for a type 2 CG, the UE may generate sidelink grant confirmation for the configured sidelink grant. In detail, the UE may generate a sidelink grant confirmation MAC CE. On the other hand, when the DCI indicates activation for the type 2 CG, the UE may generate sidelink grant confirmation for the configured sidelink grant, and may determine the PSCCH and PSSCH duration for multiple MAC PDU transmission. For example, a type 1 CG may be a CG type in which the UE receives a grant through RRC and performs transmission through scheduled resources without DCI or other triggering. On the other hand, the type 2 CG may be a CG type in which, if the UE receives the grant through RRC and then triggers corresponding grant-based transmission through DCI, the UE activates the CG and performs transmission.

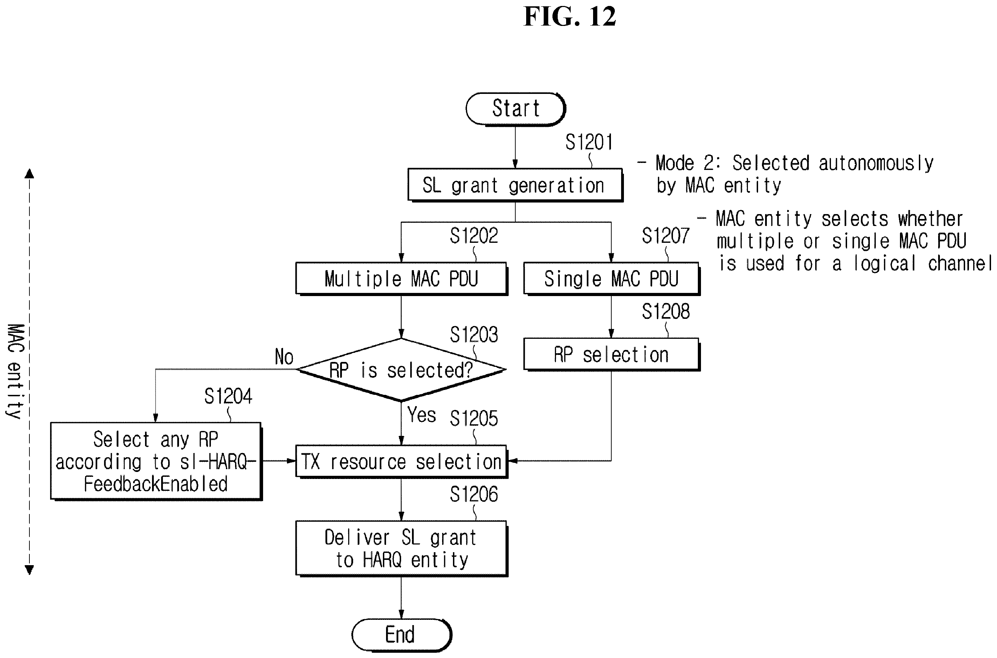

FIG. 12 illustrates a method of a UE that operates based on sidelink resource assignment mode 2, applicable to the present disclosure. For example, the sidelink resource assignment mode 2 may be a mode in which the UE directly determines a resource to perform sidelink communication through sensing. Referring to FIG. 12, the UE may generate a sidelink resource (S1201). In detail, a MAC layer of the UE may select a resource within a resource pool based on sensing and random selection within a sidelink carrier. For example, if a sidelink grant is received from the MAC layer of the UE, a physical layer of the UE may perform operation based on this. Also, for example, the MAC layer of the UE may configure at least one logical channel (LCH) and the UE may perform retransmission. When "sl-HARQ-FeedbackEnabled" is set to "enabled" in at least one LCH among LCHs configured to the UE, the UE may determine that a PSFCH is configured in at least one resource pool.

Referring to FIG. 12, the UE may generate a sidelink grant (S1201). Here, the UE may determine whether to configure a plurality of MAC PDUs depending on how much data is included in an LCH. For example, the UE may generate the sidelink grant for multiple MAC PDU transmission as a case in which data is present in a specific LCH (S1202). Here, the UE may select a resource pool depending on whether "sl-HARQ-FeedbackEnabled" of the corresponding LCH is enabled (S1203). For example, when "sl-HARQ-FeedbackEnabled" of the corresponding LCH is set to "enable," the UE may select one of resource pools in which the PSFCH is configured as a resource pool within the configured resource pool (S1204). On the other hand, when "sl-HARQ-FeedbackEnabled" of the LCH is set to "disable," the UE may select a single resource pool regardless of whether the PSFCH is configured within the configured resource pool (S1204). Then, the UE may perform resource selection (or reselection) in the selected resource pool (S1205). Also, the UE may deliver the sidelink grant to a HARQ entity (S1206). For example, the UE may continuously perform a transmission resource selection (or reselection) check operation until the UE determines to cancel sidelink grant generation corresponding to multiple MAC PDU transmission or until the corresponding resource pool is released by RRC. For example, when the UE performs transmission resource reselection based on a transmission resource selection (or reselection) operation, the UE may select an available value within "SL-ResourceReservePeriodList" configured by RRC as a resource reservation interval, $P_{RVSP\_TX}$. The UE may select a value larger than remaining packet delay budget (PDB) of sidelink data within "SL-ResourceReservePeriodList" as the resource reservation interval, $P_{RVSP\_TX}$. For example, in each resource pool, "SL-ResourceReservePeriodList" may have up to 16 reservation interval values. The reservation interval values may indicate 0, 1~99, 100, 200, 300, 400, and 1000 ms values, but may not be limited thereto. If the selected resource reservation interval, $P_{RVSP\_TX}$, is greater than or equal to 100 ms, the UE may randomly select a value between [5,15] and may set the same to a sidelink resource reselection counter (SL_RESOURCE_RESELECTION_COUNTER). On the other hand, if the resource reservation interval, $P_{RVSP\_TX}$, is less than 100 ms, the UE may randomly select a value between

$$\left[ 5 \times \left\lceil \frac{100}{\max(20, P_{rsvp\_TX})} \right\rceil, \ 15 \times \left\lceil \frac{100}{\max(20, P_{rsvp\_TX})} \right\rceil \right]$$ and may set the same to the sidelink resource reselection counter (SL_RESOURCE_RESELECTION_COUNTER).

Also, the UE may select the number of HARQ retransmissions and frequency resources within values configured to RRC parameters. The UE may randomly select time and frequency resources for one transmission opportunity from among resources indicated by the physical layer according to remaining PDB of sidelink data in LCHs and an amount of selected frequency resource. For example, the UE may use the randomly selected resource to select a periodic resource located by the resource reservation interval, $P_{RVSP\_TX}$. Also, when the UE selects at least one HARQ retransmission, the MAC layer of the UE may randomly select a resource in consideration of a minimum time gap with the PSFCH of the resource pool, the remaining PDB of sidelink data, and the number of HARQ retransmissions if resources indicated by the physical layer remain. The UE may use the randomly selected resource to select the periodic resource located by the resource reservation interval, $P_{RVSP\_TX}$. Here, the UE may determine a first transmission as an initial transmission, and may determine a subsequent transmission as a retransmission in resources periodically configured every resource reservation interval, $P_{RVSP\_TX}$.

Also, for example, when the UE generates the sidelink grant for single MAC PDU transmission as a case in which data is present in the specific LCH (S1203), the UE may select the resource pool depending on whether "sl-HARQ-FeedbackEnabled" of the corresponding LCH is enabled (S1203). That is, when "sl-HARQ-FeedbackEnabled" of the LCH is set to "enable," the UE may select one of resource pools in which the PSFCH is configured within the configured resource pool. On the other hand, when "sl-HARQ-FeedbackEnabled" of the LCH is set to "disable," the UE may select a single resource pool regardless of whether the PSFCH is configured within the configured resource pool.

As another example, when the UE performs sidelink channel state information (CSI) reporting as a case in which data is present in the specific LCH, the UE may select the resource pool depending on whether "sl-HARQ-Feedback-Enabled" of the LCH is enabled. When "sl-HARQ-FeedbackEnabled" of the LCH is set to "enable," the UE may select one of resource pools in which the PSFCH is configured within the configured resource pool. On the other hand, when "sl-HARQ-FeedbackEnabled" of the LCH is set to "disable," the UE may select one resource pool regardless of whether the PSFCH is configured within the configured resource pool. Here, "sl-HARQ-FeedbackEnabled" may be included in "SL-LogicalChannelConfig IE" and may be as shown in Table 10 below, but may not be limited thereto.

[Table 10]

| sl-HARQ-FeedbackEnabled ENUMERATED {enabled, disabled} |
| --- |

Then, the UE may perform resource selection (or reselection) in the selected resource pool (S1205). Also, the UE may deliver the sidelink grant to a HARQ entity (S1206). For example, the UE may continuously perform a transmission resource selection (or reselection) check operation until the UE determines to cancel sidelink grant generation corresponding to the single MAC PDU transmission or until the corresponding resource pool is released by RRC. The UE may select the number of HARQ retransmissions and frequency resources within values configured to RRC parameters. Also, the UE may randomly select time and frequency resources for one transmission opportunity from among resources indicated by the physical layer according to remaining PDB of sidelink data in LCHs, an amount of the selected frequency resource, and latency requirement of SL-CSI. Also, when at least one HARQ retransmission is selected, the MAC layer of the UE may randomly select resources in consideration of the minimum time gap with the PSFCH of the resource pool, the remaining PDB of sidelink data, and the number of HARQ retransmissions if resources indicated by the physical layer of the UE remain. For example, when transmission resources may not be selected according to resources assigned by previous SCI, the UE may select retransmission resources in a different manner, but it may not be limited to a specific form.

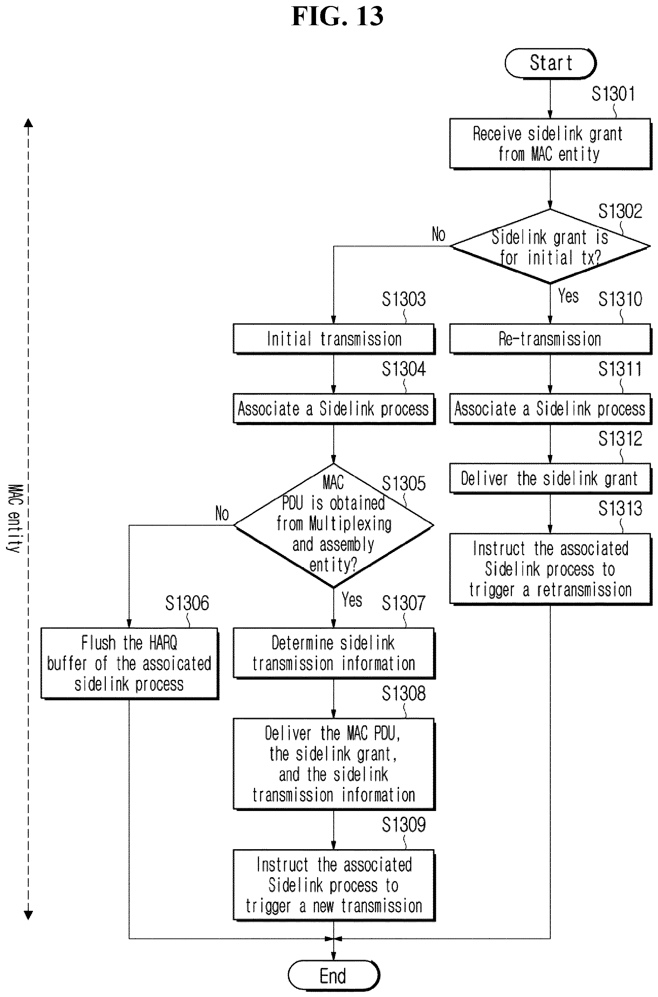

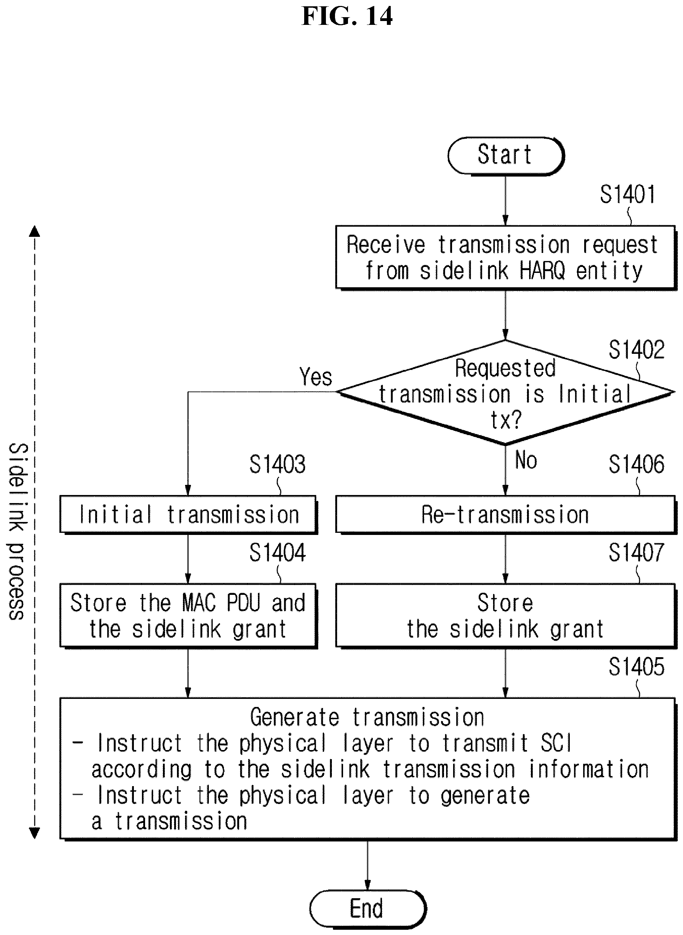

FIG. 13 illustrates a sidelink HARQ entity operation method applicable to the present disclosure, and FIG. 14 illustrates a sidelink process applicable to the present disclosure. Referring to FIG. 13, a sidelink HARQ entity may receive a sidelink grant from a MAC entity (S1301). For example, the MAC entity of the UE may perform resource pool selection and resource selection. The sidelink HARQ entity may perform MAC PDU acquisition and transmission determination and sidelink transmission information determination. Also, a sidelink process may represent instructing a transmission to the physical layer. Here, each of the MAC entity and the HARQ entity may be a different entity, but they may be logically distinguished entities and may not be limited to a specific form. In the following, for clarity of description, description is made based on an operation performed by each of the MAC entity and the HARQ entity. However, it may not be limited thereto.

For example, the sidelink HARQ entity may verify whether the sidelink grant is for an initial transmission (S1302). When the sidelink grant is for the initial transmission (S1303), the sidelink HARQ entity may verify an associated sidelink process (S1304). Here, when the sidelink HARQ entity does not acquire a MAC PDU from a multiplexing and assembly entity (S1305), the sidelink HARQ entity may flush a HARQ buffer of the associated sidelink process (S1306). For example, if the sidelink HARQ entity selects a resource pool due to generation of the sidelink grant in the MAC entity, but a MAC PDU is not delivered from the multiplexing and assembly entity, the UE may ignore the generated sidelink grant. For example, the UE may perform the aforementioned operation for periodic resource configuration in consideration of a MAC PDU that is subsequently generated, but it is not limited thereto.

On the other hand, when the sidelink HARQ entity acquires the MAC PDU from the multiplexing and assembly entity (S1305), the sidelink HARQ entity may determine sidelink transmission information (S1307). Then, the sidelink HARQ entity may deliver the MAC PDU, the sidelink grant, and the sidelink transmission information to the sidelink process (S1308). Then, the sidelink HARQ entity may instruct the associated sidelink process to trigger a new transmission to the MAC entity (S1309).

On the other hand, when the sidelink grant is not for the initial transmission (S1302), the sidelink HARQ entity may determine a retransmission (S1310). Here, the sidelink HARQ entity may verify the associated sidelink process (S1311), and may deliver the sidelink grant to the MAC entity (S1312). Then, the sidelink HARQ entity may instruct the associated sidelink process to trigger a new transmission to the MAC entity (S1313).

Also, for example, referring to FIG. 14, the MAC entity may receive a request from the sidelink HARQ entity (S1401). Here, when the request is a request for initial transmission (S1402), the MAC entity may perform initial transmission (S1403). Also, the MAC entity may store a MAC PDU and a sidelink grant (S1404). Then, the MAC entity may generate a transmission (S1405). For example, the MAC entity may instruct the physical layer to transmit SCI according to sidelink transmission information. Also, the MAC entity may instruct the physical layer to perform the aforementioned transmission and, based on this, transmission may be performed.

On the other hand, when the request is not the request for initial transmission (S1402), the MAC entity may perform a retransmission (S1406). Also, the MAC entity may store the sidelink grant (S1407). Then, the MAC entity may generate the transmission (S1405). For example, the MAC entity may instruct the physical layer to transmit SCI according to sidelink transmission information. Also, the MAC entity may instruct the physical layer to perform the aforementioned transmission and, based on this, the transmission may be performed.

Also, for example, sidelink communication may be performed by considering a situation in which a resource pool is configured in an LBT bandwidth. In detail, a plurality of LBT bandwidths (RB sets) may be configured in wide-band. Here, at least one available resource pool may be configured in each LBT bandwidth. That is, the UE may perform an LBT operation every LBT bandwidth and may need to select a resource pool based on the LBT operation. For example, if the UE fails in LBT, the UE may not use the corresponding LBT bandwidth and may not select the resource pool within the corresponding LBT bandwidth. Here, the physical layer of the UE may instruct LBT failure to the MAC layer based on the LBT operation. For example, when the UE performs a sidelink reception and generation procedure, the MAC layer of the UE may need to perform a resource pool selection of attempting a sidelink transmission by considering LBT failure or success from the physical layer of the UE, and a method for this is described below. For example, although a UE operation based on the aforementioned sidelink resource assignment mode 2 is described below, it may not be limited thereto. That is, the following operation may also apply even in the sidelink resource assignment mode 1, and it is not limited to a specific embodiment.

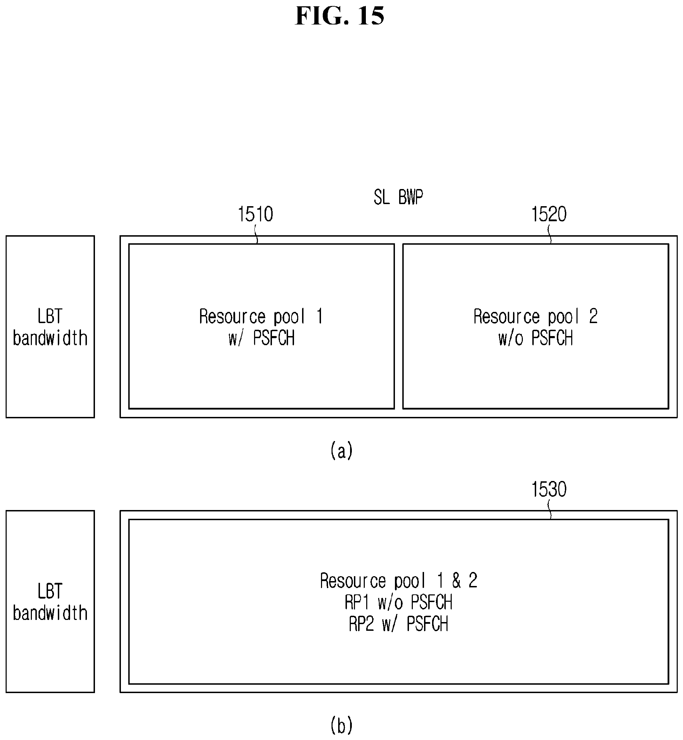

FIG. 15 illustrates a sidelink resource pool configured in a single unlicensed band, applicable to the present disclosure. Referring to FIG. 15, an SL BWP may have a 20 MHz bandwidth as a single band. Also, a resource pool may be configured within the SL BWP. In detail, for example, referring to (a) of FIG. 15, resource pools 1510 and 1520 within the SL BWP may be distinguished based on presence or absence of a PSFCH. Here, the resource pools 1510 and 1520 within the SL BWP may indicate the same resource on the frequency axis, but may be distinguished based on the time axis. For example, the resource pools 1510 and 1520 within the SL BWP may be distinguished through "sl-TimeResource" parameter, and the resource pool 1510 with the PSFCH and the resource pool 1520 without the PSFCH may be configured.

As another example, referring to (b) of FIG. 15, a resource pool 1530 within the SL BWP may be configured with the same resource on the time axis and the frequency axis. Here, the resource pool 1530 within the SL BWP may be distinguished through presence or absence of the PSFCH. That is, the resource pool 1530 within the SL BWP having the same time and frequency resources may be distinguished through PSFCH presence or absence indication. Here, when a MAC layer of the UE generates a sidelink grant, the MAC layer of the UE may select a resource pool depending on whether the PSCFH is configured. For example, if HARQ feedback is set to enable, the MAC layer of the UE may select resource pool 2 in which the PSFCH is configured. On the other hand, if the HARQ feedback is set to "disable," the MAC layer of the UE may select a resource pool regardless of whether the PSFCH is configured. Therefore, the UE may select one resource pool between the resource pool 1 and the resource pool 2. Here, for example, if LBT fails in the SL BWP of the unlicensed band a preset number of times or more, the UE may perform an LBT failure recovery operation. In detail, the UE may perform BWP switching to the LBT failure recovery operation. However, as shown in FIG. 15, when the UE operates in a single unlicensed band, the UE may not perform BWP switching to the LBT failure recovery operation and may require the LBT failure operation.

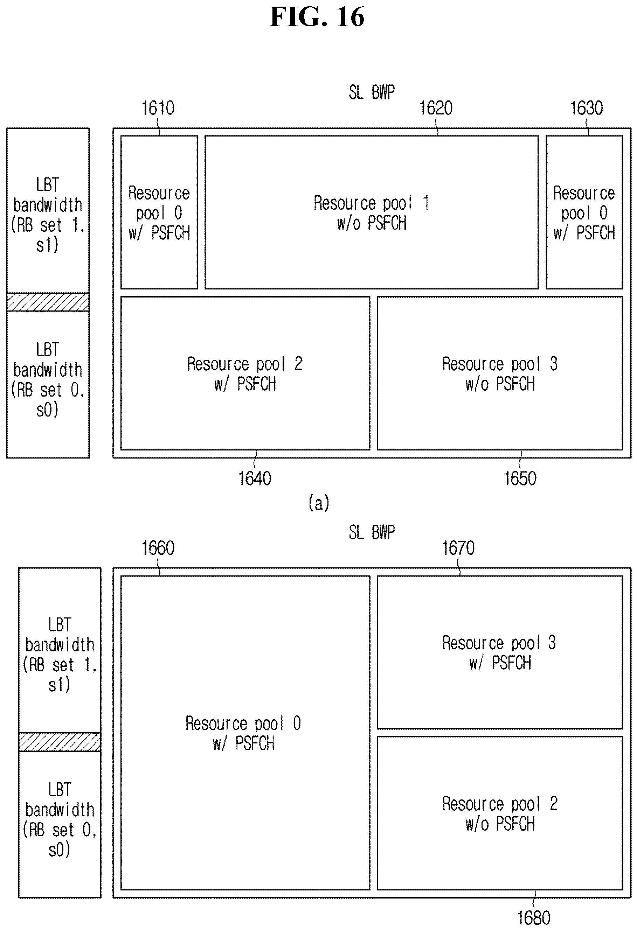

Also, for example, FIG. 16 illustrates an SL BWP configuration that operates in wide-band. Referring to FIG. 16, the SL BWP may have a 40-MHz bandwidth as wide-band. However, it is only an example and it is not limited thereto. A resource pool may be configured within the SL BWP. For example, referring to (a) of FIG. 16, a resource pool 1610, 1620, 1630, 1640, 1650 may be configured and indicated for each LBT bandwidth (or RB set) within the 40-MHz SL BWP. Here, PSFCH presence or absence may be differently configured for each resource pool 1610, 1620, 1630, 1640, 1650. As another example, referring to (b) of FIG. 16, a resource pool 1660 may be configured across two LBT bandwidths (or RB sets), and is not limited to a specific form.

Also, for example, a resource pool may be distinguishably configured for each quality of service (QoS) in specific sidelink communication (e.g., Rel-12 ProSe sidelink). Therefore, a specific resource pool may be used in specific QoS. On the other hand, the resource pool may support all QoS levels permitted in other sidelink communication (e.g., LTE V2X sidelink, NR V2X sidelink). That is, a specific service type of QoS may be satisfied in any resource pool regardless of resource pool selection. Considering this, one or more resource pools may be configured within the SL BWP, and a plurality of resource pools may not be necessarily required. Also, for example, a service type that requires specific QoS based on higher layer configuration in other sidelink communication (e.g., LTE V2X sidelink, NR V2X sidelink) may be associated with at least one carrier frequency.

Also, for example, in the case of selecting a carrier based on a carrier aggregation operation in other sidelink communication (e.g., LTE V2X sidelink, NR V2X sidelink), a plurality of carriers may be selected as candidate carriers based on prose per packet priority (PPPP). Here, a finally selected carrier may be determined as a carrier with a lowest CBR among the candidate carriers. That is, the finally selected carrier may be determined as a carrier with lowest resource occupancy in the resource pool among the candidate carriers and, through this, high QoS may be provided.

Referring to FIG. 16, an LBT procedure in an unlicensed wide-band operation, the LBT procedure may be performed in units of the LBT bandwidth (or RB set). Here, at least one resource pool may be configured in the LBT bandwidth (or RB set). For example, the UE may not recognize in which LBT bandwidth LBT will be successful. Therefore, the resource pool may be configured to be set and selected in each LBT bandwidth. For example, since an access for non-3GPP (e.g., Wi-Fi, etc.) coexists in the unlicensed band, a channel state may be different for each LBT bandwidth.

Here, referring to Table 11 below as the existing communication system, the UE may perform a resource pool selection without considering a sidelink unlicensed band operation and in consideration of only "sl-HARQ-Feedback-Enabled" parameter. However, when the UE performs a resource pool selection based on the sidelink unlicensed band, the UE may need to perform the resource pool selection by considering whether LBT fails. In detail, when the UE selects a resource pool within an RB set in which LBT failure occurs, the UE may not occupy a channel, which makes it impossible to transmit PSCCH and PSSCH.

[Table 11]

| SL grant reception and SCI transmission |
|---|
| ....... |
| 2> if the MAC entity has not selected a pool of resources allowed for the logical channel: |
|     3> if SL data is available in the logical channel for sidelink discovery: |
|         4> if *sl-BWP-DiscPoolConfig* or *sl-BWP-DiscPoolConfigCommon* is configured according to TS 38.331 [5]: |
|             5> select the *sl-DiscTxPoolSelected* configured in *sl-BWP-DiscPoolConfig* or *sl-BWP-DiscPool-ConfigCommon* for the transmission of sidelink discovery message. |
|         4> else: |
|             5> select any pool of resources among the configured pools of resources. |
|     3> else if *sl-HARQ-FeedbackEnabled* is set to *enabled* for the logical channel: |
|         4> select any pool of resources configured with PSFCH resources among the pools of resources except the pool(s) in *sl-BWP-DiscPoolConfig* or *sl-BWP-DiscPoolConfigCommon,* if configured. |
|     3> else: |
|         4> select any pool of resources among the pools of resources except the pool(s) in *sl-BWP-DiscPool-Config* or *sl-BWP-DiscPoolConfigCommon,* if configured. |
|   2> perform the TX resource (re-)selection check on the selected pool of resources |
| .... |

For example, in (b) of FIG. 16, when the UE succeeds in LBT only RB set 0, the UE may not select resource pool 0 1660 and resource pool 2 1680. That is, the UE may not select a resource pool within an RB set in which LBT is a failure and may require an operation based on this. Therefore, when the UE performs a resource pool selection, the UE may consider matters in Table 12 below. In detail, the UE may perform the resource pool selection based on LBT results, and description related thereto is made below. As another example, the UE may perform the resource pool selection based on an LBT failure counter, and description related thereto is made below. As another example, the UE may perform an RB set and resource pool set selection in consideration of a CBR, and description related thereto is made below. As another example, the UE may perform the resource pool selection by considering all of the LBT failure counter and the CBR, and description related thereto is made. That is, the UE may select the resource pool in consideration of the LBT results and the CBR.

[Table 12]

| Resource pool selection: |
| --- |
| - LBT result based resource pool selection<br>- LBT failure counter based resource pool selection<br>- CBR based RB set & resource pool selection<br>- LBT failure counter & CBR based resource pool selection |

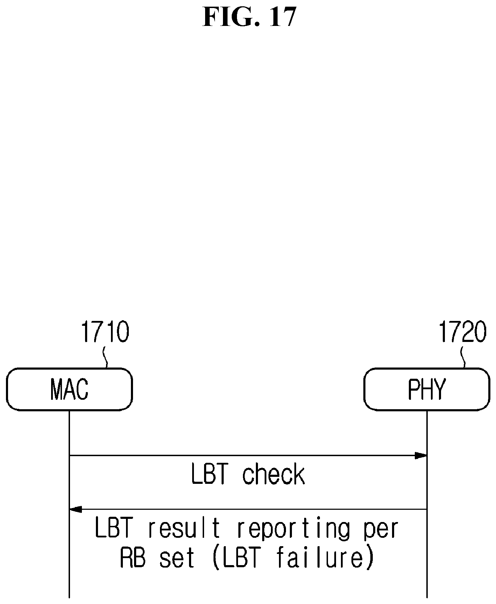

For example, when the MAC layer of the UE generates a sidelink grant, the MAC layer of the UE may select the resource pool in consideration of the LBT results or the LBT failure counter for each LBT bandwidth (or RB set) configured in the SL BWP. In detail, FIG. 17 illustrates a resource pool selection procedure applicable to the present disclosure. Referring to FIG. 17, when LCH data that requires HARQ feedback is generated, a MAC layer 1710 of the UE may perform a procedure of generating a sidelink grant. Here, the MAC layer 1710 of the UE may instructs LBT check to select a resource pool to a physical layer 1720 of the UE. The physical layer 1720 of the UE may perform an LBP operation for each LBT bandwidth (or RB set) configured within the SL BWP, and may report LBT performance result information to the MAC layer 1710 of the UE.

In detail, for example, when the MAC layer 1710 of the UE instructs the LBT check to the physical layer 1720 of the UE, the MAC layer 1710 of the UE may instruct the LBT bandwidth (or RB set) to perform LBT to the physical layer 1720 of the UE. As another example, the MAC layer 1710 of the UE may instruct the physical layer 1720 of the UE to perform LBT for the entire SL BWP. Also, LBT result reporting for each LBT bandwidth (or RB set) reported by the physical layer 1720 of the UE to the MAC layer 1710 of the UE may include information on the LBT bandwidth (or RB set) in which the LBT failure has occurred. As another example, the LBT result reporting for each LBT bandwidth (or RB set) may include information on the LBT bandwidth (or RB set) in which LBT failure does not occur, and is not limited to a specific embodiment.

In detail, for example, when the SL BWP and the resource pool is configured to the UE as shown in (a) of FIG. 16 described above, data may be generated in an LCH that requires HARQ feedback in the UE. Here, the MAC layer 1710 of the UE may instruct LBT check for the LBT bandwidth (or RB set) within the SL BWP to the physical layer 1720 of the UE. The physical layer 1720 of the UE may report an LBT failure status for the LBT bandwidth (or RB set) to the MAC layer 1710 of the UE. Here, if LBT failure occurs in RB set 0, the physical layer 1720 of the UE may deliver information on RB set 0 in which LBT failure has occurred to the MAC layer 1710. As another example, the physical layer 1720 of the UE may deliver information on RB set 1 in which LBT failure has not occurred to the MAC layer 1710 of the UE, and this is not limited to a specific embodiment. The MAC layer 1710 of the UE may select the resource pool 0 1610 in which the PSFCH is configured within RB set 1, excluding the resource pool within RB set 0 in which the LBT failure has occurred, based on reporting from the physical layer 1710 of the UE.

Also, for example, when HARQ feedback of a specific logical channel is activated as a case of performing a resource pool selection in the MAC layer of the UE, the MAC layer of the UE may select the resource pool in which the PSFCH is configured, including the LBT bandwidth (or RB set) in which LBT failure has not occurred within the configured resource pool.

As another example, when HARQ feedback of the specific logical channel is activated as a case of performing resource pool selection in the MAC layer of the UE, the MAC layer of the UE may select the resource pool in which the PSFCH is configured, including the LBT bandwidth (or RB set) in which LBT failure has not occurred within the configured resource pool. As another example, when the specific logical channel is generated by not sidelink data but SL-CSI as a case of performing resource pool selection in the MAC layer of the UE, the MAC layer of the UE may select the resource pool in which the PSFCH is configured, including the LBT bandwidth (or RB set) in which LBT failure has not occurred within the configured resource pool.

That is, the MAC layer of the UE may select the resource pool in which LBT failure has not occurred in all LBT bandwidths (or RB sets) within each resource pool in relation to each of a plurality of configured resource pools.

Also, in detail, for example, the MAC layer of the UE may acquire LBT results by instructing the LBT operation to the physical layer based on previous sidelink transmission and other operations. That is, the MAC layer of the UE may continuously verify the LBT results, but may not be limited thereto. The MAC layer of the UE may select the resource pool in which the LBT failure has not occurred in all LBT bandwidths (or RB sets) within each resource pool configured based on the LBT results.

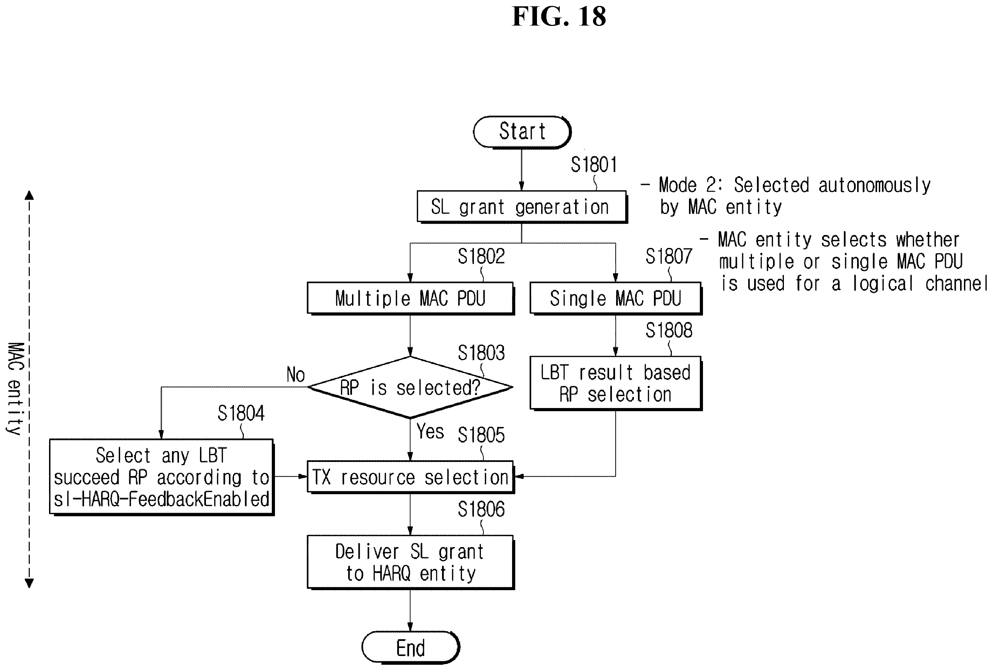

FIG. 18 illustrates a method of performing, by a UE, resource selection in consideration of LBT results, applicable to the present disclosure. For example, the UE may operate in a mode in which the UE directly determines a resource for performing sidelink communication through sensing as the sidelink resource assignment mode 2. Referring to FIG. 18, the UE may generate a sidelink resource (S1801). For example, when a sidelink grant is received from a MAC layer of the UE, a physical layer of the UE may perform an operation based on this. The MAC layer of the UE may configure at least one LCH, and the LCH may be a unit for performing retransmission. Here, the MAC layer of the UE may instruct LBT check for the SL BWP to the physical layer of the UE. Referring to FIG. 18, the UE may configure a plurality of MAC PDUs in data present in the LCH.

In detail, when the UE generates the sidelink grant for multiple MAC PDU transmission as a case in which data is present in a specific LCH (S1802), the UE may select a resource pool depending on "sl-HARQ-FeedbackEnabled" of the corresponding LCH is enabled (S1803). For example, when "sl-HARQ-FeedbackEnabled" of the corresponding LCH is set to "enable," the UE may be associated with an LBT bandwidth (RB set) in which LBT failure has not occurred in the configured resource pool, and may select a resource pool in which a PSFCH is configured (S1804). On the other hand, when "sl-HARQ-FeedbackEnabled" of the LCH is set to "disable," the UE may be associated with the LBT bandwidth (RB set) in which LBT failure has not occurred in the configured resource pool and may select any one resource pool regardless of whether the PSFCH is configured (S1804). That is, the UE may select the resource pool by considering whether HARQ feedback is configured in an LBT bandwidth (or RB set) in which LBT is successful. Then, the UE may perform resource selection (or reselection) in the selected resource pool (S1805). Also, the UE may deliver the sidelink grant to a HARQ entity (S1806). For example, the UE may continuously perform a transmission resource selection (or reselection) check operation until the UE determines to cancel sidelink grant generation corresponding to multiple MAC PDU transmission or until the corresponding resource pool is released by RRC. For example, when the UE performs transmission resource reselection based on a transmission resource selection (or reselection) operation, the UE may select an available value within "SL-ResourceReservePeriodList" configured by RRC as a resource reservation interval, $P_{RVSP\_TX}$. The UE may select a value larger than remaining packet delay budget (PDB) of sidelink data within "SL-ResourceReservePeriodList" as the resource reservation interval, $P_{RVSP\_TX}$. For example, in each resource pool, "SL-ResourceReservePeriodList" may have up to 16 reservation interval values. The reservation interval values may indicate 0, 1~99, 100, 200, 300, 400, and 1000 ms, but may not be limited thereto. If the selected resource reservation interval, $P_{RVSP\_TX}$, is greater than or equal to 100 ms, the UE may randomly select a value between [5,15] and may set the same to a sidelink resource reselection counter (SL_RESOURCE_RESELECTION_COUNTER). On the other hand, if the resource reservation interval, $P_{RVSP\_TX}$, is less than 100 ms, the UE may randomly select a value between

$$\left[ 5 \times \left[ \frac{100}{\max(20, P_{rsvp\_TX})} \right], \ 15 \times \left[ \frac{100}{\max(20, P_{rsvp\_TX})} \right] \right]$$ and may set the same to the sidelink resource reselection counter (SL_RESOURCE_RESELECTION_COUNTER).

Also, the UE may select the number of HARQ retransmissions and frequency resources within values configured to RRC parameters. The UE may randomly select time and frequency resources for one transmission opportunity from among resources indicated by the physical layer according to remaining PDB of sidelink data in LCHs and an amount of selected frequency resource. For example, the UE may use the randomly selected resource to select a periodic resource located by the resource reservation interval, $P_{RVSP\_TX}$. Also, when the UE selects at least one HARQ retransmission, the MAC layer of the UE may randomly select a resource in consideration of a minimum time gap with the PSFCH of the resource pool, the remaining PDB of sidelink data, and the number of HARQ retransmissions. The UE may use the randomly selected resource to select the periodic resource located by the resource reservation interval, $P_{RVSP\_TX}$. Here, the UE may determine a first transmission as an initial transmission and may determine a subsequent transmission as a retransmission in resources periodically configured every resource reservation interval, $P_{RVSP\_TX}$.

Also, for example, when the UE generates the sidelink grant for single MAC PDU transmission as a case in which data is present in the specific LCH (S1807), the UE may select the resource pool associated with the LBT bandwidth (or RB set) in which LBT failure has not occurred within the configured resource pool depending on whether "sl-HARQ-FeedbackEnabled" of the corresponding LCH is enabled (S1808).

Also, for example, when the UE performs sidelink channel state information (CSI) reporting as a case in which data is present in the specific LCH, the UE may be associated with the LBT bandwidth (or RB set) in which LBT failure has not occurred within the configured resource pool, and may select one resource pool regardless of whether the PSFCH is configured. Then, the UE may perform resource selection (or reselection) in the selected resource pool (S1805). Also, the UE may deliver the sidelink grant to a HARQ entity (S1806). For example, the UE may continuously perform a transmission resource selection (or reselection) check operation until the UE determines to cancel sidelink grant generation corresponding to the single MAC PDU transmission or until the corresponding resource pool is released by RRC. The UE may select the number of HARQ retransmissions and frequency resources within values configured to RRC parameters. Also, the UE may randomly select time and frequency resources for one transmission opportunity from among resources indicated by the physical layer according to remaining PDB of sidelink data in LCHs, an amount of the selected frequency resource, and latency requirement of SL-CSI. Also, when at least one HARQ retransmission is selected, the MAC layer of the UE may randomly select resources in consideration of the minimum time gap with the PSFCH of the resource pool, the remaining PDB of sidelink data, and the number of HARQ retransmissions if resources indicated by the physical layer remain. For example, when retransmission resources may not be selected according to resources assigned by previous SCI, the UE may select retransmission resources in a different manner, but it may not be limited to a specific form.

Also, for example, referring to FIG. 18, the sidelink resource pool may be removed or added based on ID for each SL BWP. Here, the UE may derive a size of a sidelink resource pool based on a start RB location of a subchannel in resource pool configuration associated with an identifier. Also, when "intraCellguardBand" parameter is configured to the UE, the UE may determine that a plurality of RBs sets are configured. Therefore, the MAC layer of the UE may receive a report on presence or absence of LBT failure in the plurality of RB sets from the physical layer of the UE. Here, the physical layer of the UE may recognize a resource pool included in an RB set in which LBT failure has not occurred. That is, the physical layer of the UE may verify resource pool configuration in an implicit manner without separate indication. As another example, the UE may explicitly recognize relationship for an RB set related to the resource pool. In detail, for example, when RRB parameters for the SL BWP are configured to the UE, the UE may receive indication for an associated RB set index within resource pool configuration, but it is not limited thereto.

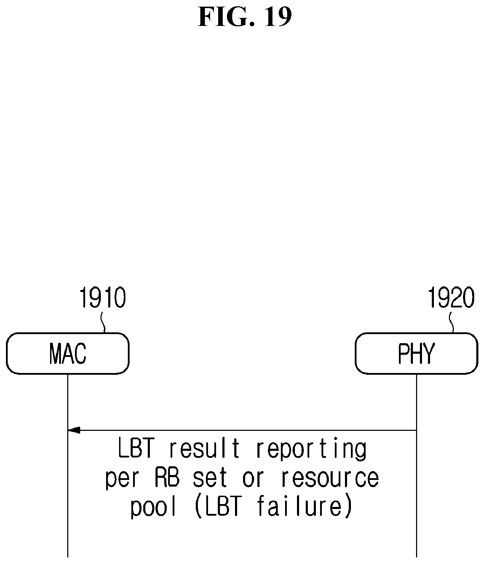

FIG. 19 illustrates a method of selecting a resource pool based on an LBT failure counter, applicable to the present disclosure. Referring to FIG. 19, when LCH data that requires HARQ feedback is generated in a MAC layer 1910 of the UE, the MAC layer 1910 of the UE may generate a sidelink grant and may perform a resource pool selection. Here, the MAC layer 1910 of the UE may receive and count LBT result reporting from a physical layer 1920 of the UE to select the resource pool. For example, LBT result reporting may be performed for each LBT bandwidth (or RB set) or resource pool. As another example, the physical layer 1920 of the UE may report an LBT failure counter value to the MAC layer 1910 of the UE per LBT bandwidth (or RB set) or resource pool.

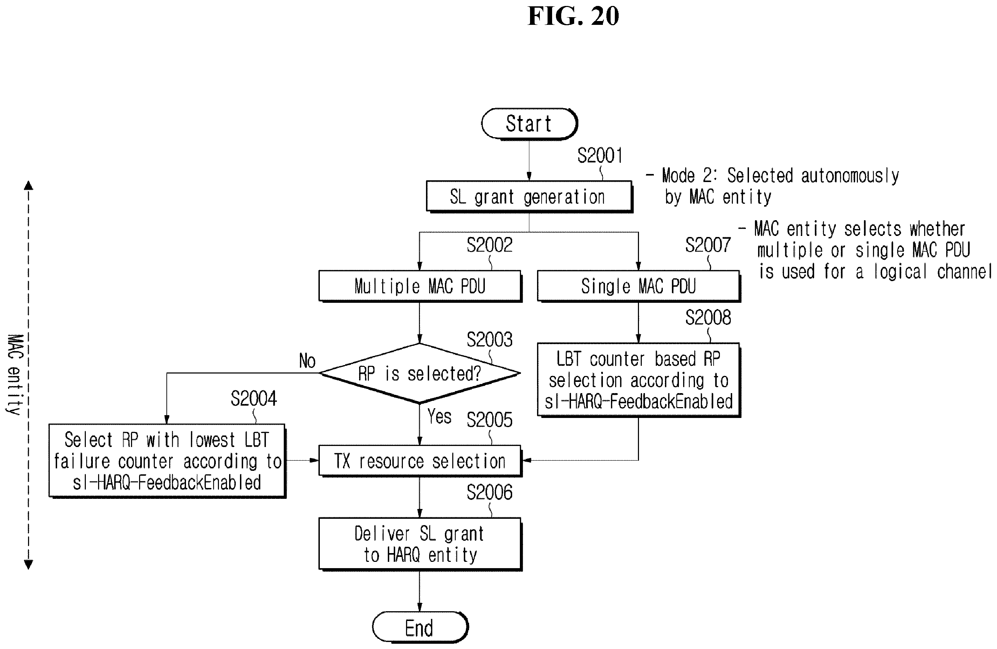

Also, for example, information included in the LBT result reporting may be information in which the LBT failure counter does not exceed a preset threshold per LBT bandwidth (or RB set) or resource pool. That is, if the LBT failure counter does not exceed the preset threshold, the MAC layer 1910 of the UE may acquire LBT result reporting per RB set or resource pool from the physical layer 1920. In detail, for example, a resource pool selection procedure based on an LBT counter may be performed in the procedure of generating the sidelink grant, which may be as shown in FIG. 20. For example, FIG. 20 illustrates a method of performing, by a UE, resource selection in consideration of an LBT counter, applicable to the present disclosure. The UE may operate in a mode in which the UE directly determines a resource to perform sidelink communication through sensing as the sidelink resource assignment mode 2. Referring to FIG. 20, the UE may generate a sidelink resource (S2001). For example, if the sidelink grant is received from a MAC layer, a physical layer of the UE may perform an operation based on this. Also, for example, the MAC layer of the UE may configure at least one LCH, and the LCH may be a unit for performing retransmission. Here, the MAC layer of the UE may instruct LBT check for the SL BWP to the physical layer of the UE.

Referring to FIG. 20, the UE may determine whether to configure a plurality of MAC PDUs by considering data of an LCH. When the UE generates the sidelink grant for multiple MAC PDU transmission as a case in which data is present in a specific LCH (S2002), the UE may select a resource pool depending on whether "sl-HARQ-FeedbackEnabled" of the corresponding LCH is enabled (S2003). Also, the UE may compare an LBT failure counter value and a preset value (or threshold) and may select the resource pool. For example, when "sl-HARQ-FeedbackEnabled" of the corresponding LCH is set to "enable," the UE may select a resource pool having an LBT failure counter value less than a preset value (or threshold) or a resource pool in which a PSFCH is configured in an LBT bandwidth (RB set) and may select one of corresponding resource pools. As another example, the UE may select the resource pool having the LBT failure counter value less than the preset value (or threshold), the resource pool having the smallest LBT failure counter value in the LBT bandwidth (RB set), or the resource pool in which the PSFCH is configured in the LBT bandwidth (RB set). As another example, when the number of resource pools having the LBT failure counter value less than the preset value (or threshold) or LBT bandwidths (RB sets) is plural, the UE may select the resource pool or the LBT bandwidth (RB set) in a different manner, and it is not limited to a specific embodiment (S2004).

On the other hand, when "sl-HARQ-FeedbackEnabled" of the LCH is set to "disable," the UE may select one of the resource pool having the LBT failure counter value less than the preset value (or threshold) and the resource pool regardless of whether the PSFCH is configured in the LBT bandwidth (RB set). As another example, the UE may select one of the resource pool having the LBT failure counter value less than the preset value (or threshold) and the resource pool having the smallest LBT failure counter value in the LBT bandwidth (RB set), regardless of whether the PSFCH is configured in the LBT bandwidth (RB set). As another example, when the number of resource pools having the LBT failure counter value less than the preset value (or threshold) or LBT bandwidths (RB sets) is plural, the UE may select the resource pool or the LBT bandwidth (RB set) in a different manner, and it is not limited to a specific embodiment (S2004).

Then, the UE may perform a resource selection (or reselection) in the selected resource pool (S2005). Also, the UE may deliver the sidelink grant to an HARQ entity (S2006). For example, the UE may continuously perform a transmission resource selection (or reselection) check operation until the UE determines to cancel sidelink grant generation corresponding to multiple MAC PDU transmission or until the corresponding resource pool is released by RRC. For example, when the UE performs transmission resource reselection based on a transmission resource selection (or reselection) operation, the UE may select an available value within "SL-ResourceReservePeriodList" configured by RRC as a resource reservation interval, $P_{RVSP\_TX}$. The UE may select a value larger than remaining packet delay budget (PDB) of sidelink data within "SL-ResourceReservePeriodList" as the resource reservation interval, $P_{RVSP\_TX}$. For example, in each resource pool, "SL-ResourceReservePeriodList" may have up to 16 resource reservation period values. The reservation interval values may indicate 0, 1~99, 100, 200, 300, 400, and 1000 ms, but may not be limited thereto. If the selected resource reservation interval, $P_{RVSP\_TX}$, is greater than or equal to 100 ms, the UE may randomly select a value between [5,15] and may set the same to a sidelink resource reselection counter (SL_RESOURCE_RESELECTION_COUNTER). On the other hand, if the resource reservation interval, $P_{RVSP\_TX}$, is less than 100 ms, the UE may randomly select a value between $$\left[5 \times \left[\frac{100}{\max(20, P_{rsvp\_TX})}\right], \ 15 \times \left[\frac{100}{\max(20, P_{rsvp\_TX})}\right]\right]$$ and may set the same to the sidelink resource reselection counter (SL_RESOURCE_RESELECTION_COUNTER).

Also, the UE may select the number of HARQ retransmissions and frequency resources within values configured to RRC parameters. The UE may randomly select time and frequency resources for one transmission opportunity from among resources indicated by the physical layer according to remaining PDB of sidelink data of LCHs and an amount of selected frequency resource. For example, the UE may use the randomly selected resource to select a periodic resource located by the resource reservation interval, $P_{RVSP\_TX}$. Also, when the UE selects at least one HARQ retransmission, the MAC layer of the UE may randomly select a resource in consideration of a minimum time gap with the PSFCH of the resource pool, the remaining PDB of the sidelink data, and the number of HARQ retransmissions. The UE may use the randomly selected resource to select the periodic resource located by the resource reservation interval, $P_{RVSP\_TX}$. Here, the UE may determine a first transmission as an initial transmission and may determine a subsequent transmission as a retransmission in resources periodically configured every resource reservation interval, $P_{RVSP\_TX}$.

Also, for example, when the UE generates the sidelink grant for single MAC PDU transmission as a case in which data is present in the specific LCH (S2007), the UE may select the resource pool associated with the LBT bandwidth (or RB set) in which the LBT counter is not greater than the threshold within the configured resource pool depending on whether "sl-HARQ-FeedbackEnabled" of the corresponding LCH is enabled (S2008).

Also, for example, when the UE performs sidelink CSI reporting as a case in which data is present in the specific LCH, the UE may be associated with an RB set in which LBT failure has not occurred within the configured resource pool, and may select one resource pool regardless of whether the PSFCH is configured. Then, the UE may perform a resource selection (or reselection) in the selected resource pool (S2005). Also, the UE may deliver the sidelink grant to the HARQ entity (S2006). For example, the UE may continuously perform a transmission resource selection (or reselection) check operation until the UE determines to cancel sidelink grant generation corresponding to the single MAC PDU transmission or until the corresponding resource pool is released by RRC. The UE may select the number of HARQ retransmissions and frequency resources within values configured to RRC parameters. Also, the UE may randomly select time and frequency resources for one transmission opportunity from among resources indicated by the physical layer according to remaining PDB of sidelink data in LCHs, an amount of the selected frequency resource, and latency requirement of SL-CSI. Also, when at least one HARQ retransmission is selected, the UE may randomly select resources in consideration of the minimum time gap with the PSFCH of the resource pool, the remaining PDB of sidelink data, and the number of HARQ retransmissions if resources indicated by the physical layer of the UE remain. For example, when retransmission resources may not be selected according to resources assigned by previous SCI, the UE may select retransmission resources in a different manner, but it may not be limited to a specific form.

Also, for example, referring to FIG. 20, the sidelink resource pool may be removed or added based on ID for each SL BWP. Here, the UE may derive a size of a sidelink resource pool based on a start RB location of a subchannel in resource pool configuration associated with an identifier. Also, when "intraCellguardBand" parameter is configured to the UE, the UE may determine that a plurality of LBT bandwidths (RBs sets) are configured. Therefore, the MAC layer of the UE may receive a report on presence or absence of LBT failure in the plurality of LBT bandwidths (RB sets) from the physical layer of the UE. Here, the physical layer of the UE may recognize a resource pool included in an LBT bandwidth (RB set) in which LBT failure has not occurred. That is, the physical layer of the UE may verify resource pool configuration in an implicit manner without separate indication. As another example, the UE may explicitly recognize relationship for an RB set related to the resource pool. In detail, for example, when RRB parameters for BWP are configured to the UE, the UE may receive indication for an associated LBT bandwidth (RB set) index within resource pool configuration, but it is not limited thereto.

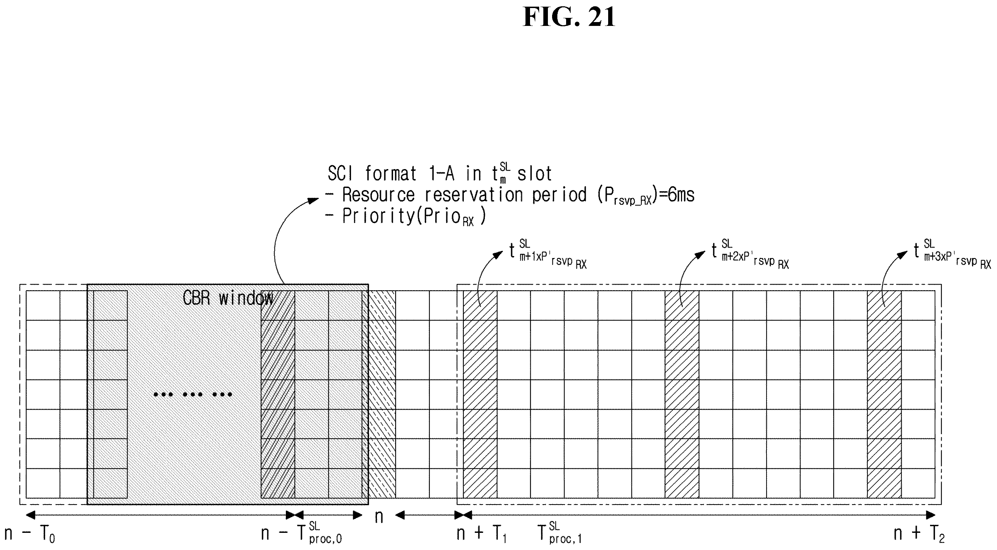

FIG. 21 illustrates a method of generating a sidelink grant and selecting a resource based on a CBR, applicable to the present disclosure. Referring to FIG. 21, data may be generated at a point in time n. The UE may generate a sidelink grant to transmit the generated data and may perform a resource selection. For example, when the UE generates the sidelink grant, the UE may select a CR limit, the number of retransmission resources, the number of selectable subchannels, range of selectable modulation coding scheme (MCS) levels, and transmission power. The UE may generate the sidelink grant in consideration of the aforementioned parameters. That is, the UE may perform RB set and resource pool selection in consideration of the aforementioned parameters and, through this, may generate the sidelink grant without additional latency.

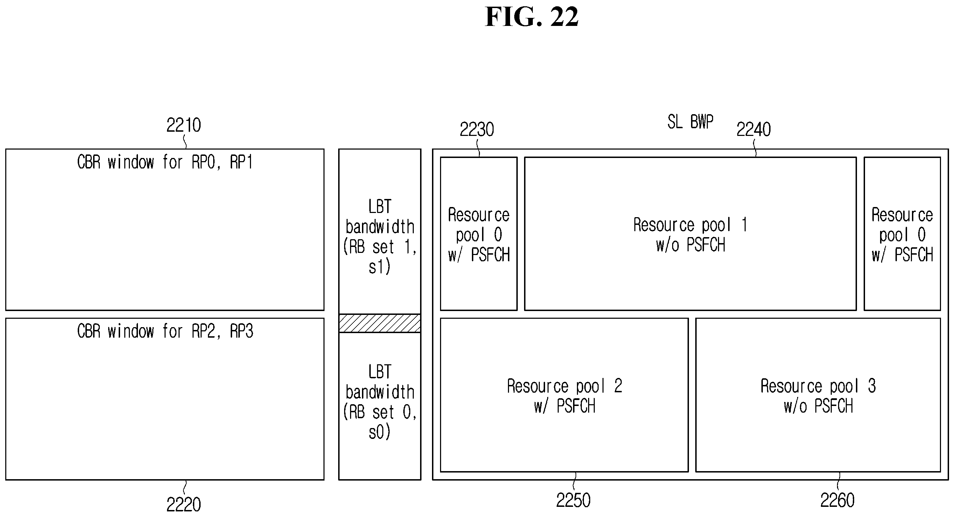

FIG. 22 illustrates a CBR window in a sidelink unlicensed band, applicable to the present disclosure. Referring to FIG. 22, a CBR window (2210, 2220) may be configured for each resource pool. For example, in FIG. 22, the CBR window (2210, 2220) may be configured for each RB set in the sidelink unlicensed band. In detail, the CBR window 1 2210 may be configured to correspond to resource pool 0 (RP0) 2230 and resource pool 1 (RP1) 2240. Also, the CBR window 2 2220 may be configured to correspond to resource pool 2 (RP2) 2250 and resource pool 3 (RP3) 2260. For example, in FIG. 22, the CBR window is expressed identically in the resource pool located in the same LBT bandwidth (RB set), but this is only an example and is not limited thereto. That is, the CBR window may be configured for each resource pool and may be configured in a different form. In detail, for example, although the CBR window size may be configured identically in a resource pool included in the same LBT bandwidth (RB set), but an RSSI threshold may be differently set. As another example, the CBR window size may be differently configured for each resource pool by considering characteristics of the sidelink unlicensed band and may not be limited to a specific form.

For example, when sidelink data is generated in an LCH in which "sl-HARQ-FeedbackEnabled" is set to "enable," the UE may determine the resource pool 0 2230 and the resource pool 2 2250 in which a PSFCH is configured within the SL BWP as candidate resource pools. The UE may verify a CBR for each of the resource pool 0 2230 and the resource pool 2 2250 that are candidate resource pools, and may select a resource pool having the CBR less than a preset value (or threshold) as a final resource pool. As another example, the UE may verify the CBR for each of the resource pool 0 2230 and the resource pool 2 2250 that are candidate resource pools and may compare the CBRs, and may select a resource pool having a smaller CBR as the final resource pool.

On the other hand, when sidelink data is generated in an LCH in which "sl-HARQ-FeedbackEnabled" is set to "disable," the UE may determine all resource pools, the resource pool 0 2220, the resource pool 1 2230, the resource pool 2 2240, and the resource pool 3 2250, as candidate resource pools regardless of whether the PSFCH is configured within the SL BWP. The UE may verify a CBR for each of the resource pool 0 2220, the resource pool 1 2230, the resource pool 2 2240, and the resource pool 3 2250 that are candidate resource pools, and may select the resource pool having the CBR less than the preset value (or threshold) as the final resource pool. As another example, the UE may verify the CBR for each of the resource pool 0 2220, the resource pool 1 2230, the resource pool 2 2240, and the resource pool 3 2250 that are candidate resource pools, and may compare the CBRs, and may select the resource pool having the smallest CBR as the final resource pool. As another example, the UE may configure a plurality of final resource pools, and it is not limited to a specific form.

Also, for example, the sidelink resource pool may be removed or added based on ID for each SL BWP. Here, the UE may derive a size of a sidelink resource pool based on a start RB location of a subchannel in resource pool configuration associated with an identifier. Also, when "intraCellguardBand" parameter is configured to the UE, the UE may determine that a plurality of LBT bandwidths (RB sets) are configured. Therefore, the MAC layer of the UE may receive a report on presence or absence of LBT failure in the plurality of LBT bandwidths (RB sets) from the physical layer of the UE. Here, the physical layer of the UE may recognize a resource pool included in an LBT bandwidth (RB set) in which LBT failure has not occurred. That is, the physical layer of the UE may verify resource pool configuration in an implicit manner without separate indication. As another example, the UE may explicitly recognize relationship for an RB set related to the resource pool. In detail, for example, when RRB parameters for the SL BWP are configured to the UE, the UE may receive indication for an associated RB set index within resource pool configuration, but it is not limited thereto.

As another example, the UE may select the final resource pool by considering all of an LBT failure counter and a CBR. In detail, the UE may select the resource pool having the CBR less than the preset value (or threshold). Here, when the number of resource pools selected by the UE is plural, the UE may select the final resource pool based on the LBT failure counter. As another example, the UE may select the resource pool of which the LBT failure counter is less than the preset value (or threshold). Here, when the number of resource pools selected by the UE is plural, the UE may select the final resource pool according to the CBR.

For example, as described above, when the MAC layer of the UE generates the sidelink grant, the MAC layer of the UE may instruct LBT check to the physical layer of the UE. The physical layer of the UE may perform LBT and may report the results to the MAC layer of the UE. Here, a point in time for verifying LBT results for resource pool selection and a point in time for actually transmitting SCI and data may be different. Therefore, the physical layer of the UE may require an additional operation in the case of performing an additional LBT procedure. As another example, as described above, the UE may select a single resource pool by considering at least one of an LBT failure counter value and a CBR. Here, at a point in time at which the UE transmits SCI and data, there may be a probability that LBT may fail, and transmission failure may occur accordingly.

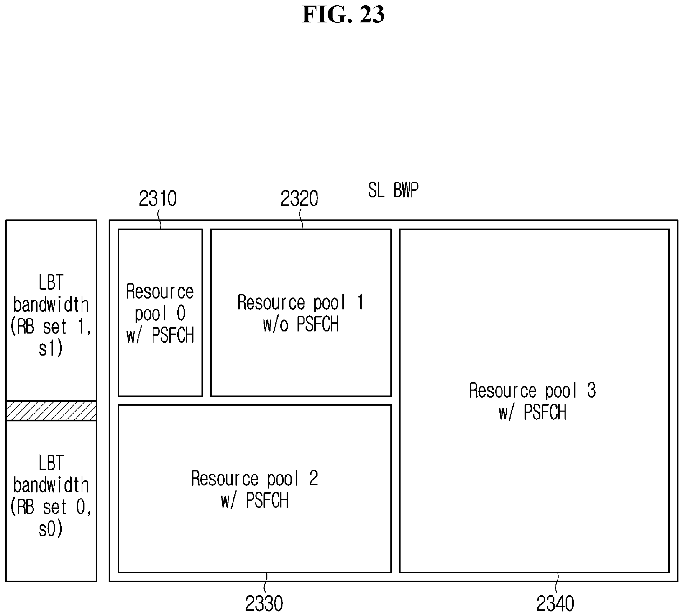

Considering the above, the UE may select at least one candidate resource pool. The UE may perform a resource selection in at least one resource pool, and may perform SCI and data transmission through the selected resource pool. In detail, for example, the MAC layer of the UE may determine a resource pool included in an RB set in which LBT is successful among candidate resource pools and may instruct transmission to the physical layer of the UE. For example, FIG. 23 illustrates a resource pool configuration in an SL BWP, applicable to the present disclosure. Referring to FIG. 23, the SL BWP of the unlicensed band may be configured to the UE. Here, the SL BWP may include at least one LBT bandwidth (or RB set) for wide-band operation, and at least one resource pool may be configured in the LBT bandwidth (or RB set). For example, in FIG. 23, each of resource pools 2310, 2320, 2330, and 2340 may be distinguished through an index and configured to the UE. Also, each of the resource pools 2310, 2320, 2330, and 2340 may differ in terms of whether a resource for HARQ feedback is configured. For example, a resource pool in which the resource for HARQ feedback is configured may be expressed as w/PSFCH (with PSFCH), and a resource pool in which the resource for HARQ feedback is not configured may be expressed as w/o PSFCH (without PSFCH). Here, PSFCH resources may be periodically configured in a logical sidelink slot. In detail, for example, when the PSFCH resource period is configured with four slots, PSCFH resources may be configured in a slot with "Sidelink slot index mod 4 = 0" based on a logical sidelink slot. The UE may select one or more candidate resource pools rather than a single resource pool and, through this, may operate considering LBT failure. For example, the UE may select a resource pool in which PSFCH resources for data transmission are configured in an LCH in which HARQ feedback is activated as a candidate resource pool. Here, the UE may select at least one candidate resource pool for each LBT bandwidth (or RB set). Referring to FIG. 23, when HARQ feedback is enabled, the candidate resource pools may be the resource pool 0 2310, the resource pool 2 2330, and the resource pool 3 2340. On the other hand, when HARQ feedback is disabled, the candidate resource pools may be the resource pool 0 2310, the resource pool 1 2320, the resource pool 2 2330, and the resource pool 3 2340. That is, when HARQ feedback is disabled, the UE may select the resource pool regardless of whether the PSFCH is configured.

Here, when the UE configures at least one resource pool in units of LBT bandwidth (or RB set), it may be as shown in Table 13 below. In detail, when HARQ feedback is enabled, the UE may select the resource pool 2 2330 as the candidate resource pool of RB set 0, may select the resource pool 0 2310 as the candidate resource pool of RB set 1, and may select the resource pool 3 2340 as the candidate resource pool of the RB set 0 and RB set 1. On the other hand, when HARQ feedback is disabled, the UE may select the resource pool 2 2330 as the candidate resource pool of RB set 0, may select the resource pool 0 2310 or the resource pool 1 2320 as the candidate resource pool of RB set 1, and may select the resource pool 3 2340 as the candidate resource pool of RB set 0 and RB set 1.

[Table 13]

| |
|---|
| - HARQ Feedback enabled: RB set 0 candidate resource pool (Resource pool 2), RB set 1 candidate resource pool (Resource pool 0), RB set 0 & 1 candidate resource pool (Resource pool 3) <br> - HARQ Feedback disabled: RB set 0 candidate resource pool (Resource pool 2), RB set 1 candidate resource pool (Resource pool 0 or 1), RB set 0 & 1 candidate resource pool (Resource pool 3) |

For example, in FIG. 23, since the resource pool configured in RB set 0 is the resource pool 2 2330 in which HARQ feedback resources are configured, the resource pool 2 2330 may be selected regardless of whether HARQ feedback is enabled/disabled in an LCH. On the other hand, the resource pool configured in the RB set 1 may be the resource pool 0 2310 in which HARQ feedback resources are configured and the resource pool 1 2320 in which HARQ feedback resources are not configured. Therefore, when HARQ feedback of the LCH is enabled, the UE may select the resource pool 0 2310 as the candidate resource pool. On the other hand, when the HARQ feedback of the LCH is disabled, the UE may select the resource pool 0 2310 or the resource pool 1 2320 as the candidate resource pool. Also, if the UE succeeds in LBT in both RB set 0 and RB set 1 and is able to occupy a channel, the UE may select the resource pool 3 2340 configured for the wide-band operation as the candidate resource pool.

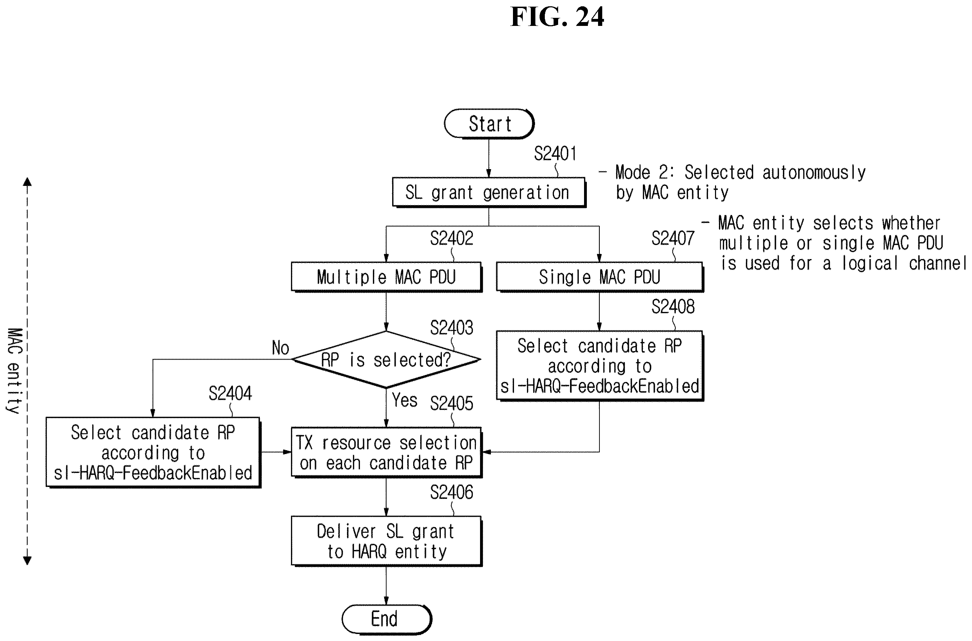

FIG. 24 illustrates a method of performing, by a UE, resource selection in consideration of an LBT counter, applicable to the present disclosure. For example, the UE may operate in a mode in which the UE directly determines a resource to perform sidelink communication through sensing, as sidelink resource assignment mode 2. Referring to FIG. 24, the UE may generate a sidelink resource (S2401). For example, if the sidelink grant is received from a MAC layer of the UE, a physical layer of the UE may perform an operation based on this. Also, for example, the MAC layer of the UE may configure at least one LCH, and the LCH may be a unit for performing retransmission. Here, the MAC layer of the UE may instruct LBT check for the SL BWP to the physical layer of the UE.

Here, referring to FIG. 24, the UE may determine whether to configure a plurality of MAC PDUs based on data of an LCH. When the UE generates the sidelink grant for multiple MAC PDU transmission as a case in which data is present in a specific LCH (S2402), the UE may select a resource pool depending on whether "sl-HARQ-FeedbackEnabled" of the corresponding LCH is enabled (S2403). Also, the UE may perform a resource pool selection in consideration of candidate resource pools. For example, when "sl-HARQ-FeedbackEnabled" of the corresponding LCH is set to "enable," the UE may select candidate resource pools based on HARQ feedback enable (S2404), and may perform a transmission resource selection in each candidate resource pool (S2405). On the other hand, when "sl-HARQ-FeedbackEnabled" of the LCH is set to "disable," the UE may select candidate resource pools based on HARQ feedback disable (S2404), and may perform the transmission resource selection in each candidate resource pool (S2405). Also, the UE may deliver the sidelink grant to a HARQ entity (S2406).

Also, for example, when the UE generates the sidelink grant for single MAC PDU transmission as a case in which data is present in the specific LCH (S2407), the UE may select the resource pool depending on whether "sl-HARQ-FeedbackEnabled" of the corresponding LCH is enabled (S2408). For example, when "sl-HARQ-FeedbackEnabled" of the corresponding LCH is set to "enable," the UE may select candidate resource pools based on HARQ feedback enable and may perform the transmission resource selection in each candidate resource pool (S2405). On the other hand, when "sl-HARQ-FeedbackEnabled" of the LCH is set to disable, the UE may select candidate resource pools based on HARQ feedback disable, and may perform the transmission resource selection in each candidate resource pool (S2405). Also, the UE may deliver the sidelink grant to the HARQ entity (S2406).

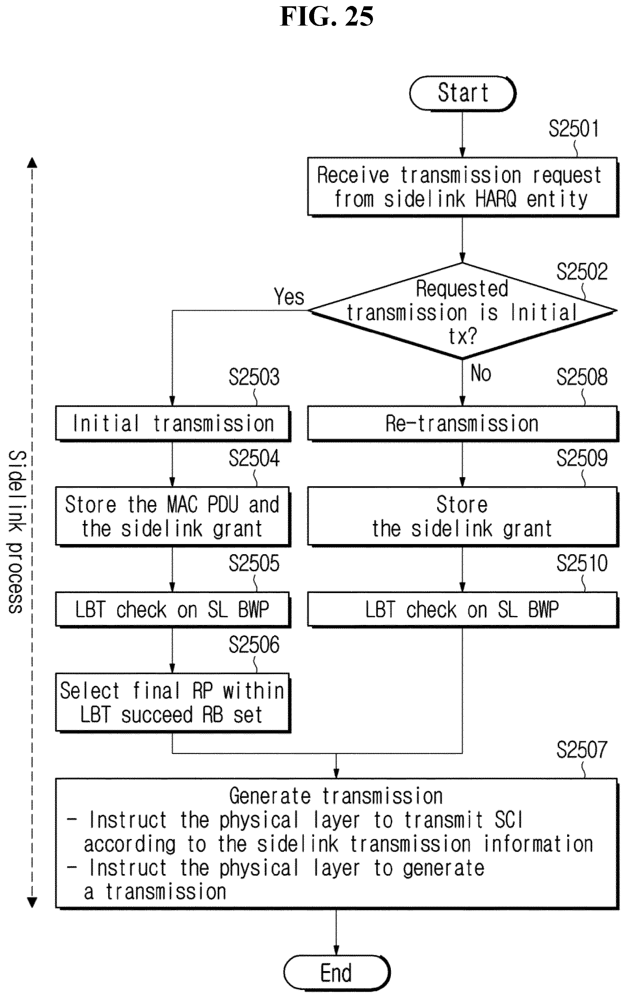

FIG. 25 illustrates a sidelink operation applicable to the present disclosure. A MAC layer of the UE may select a final resource pool, excluding a resource pool within an LBT bandwidth (or RB set) in which LBT failure has occurred. That is, the MAC layer may select the resource pool within the LBT bandwidth (or RB set) in which LBT is successful. Then, the MAC layer of the UE may instruct SCI and data transmission to a physical layer of the UE through the selected resource pool. For example, if LBT failure does not occur only in RB set 0, the MAC layer of the UE may select one of resource pools included in RB set 0. On the other hand, if LBT failure does not occur only in RB set 1, the MAC layer of the UE may select one of resource pools included in the RB set 1. As another example, if LBT failure does not occur in both RB set 0 and RB set 1, the MAC layer of the UE may select one of the entire candidate resource pools. In detail, for example, referring to FIG. 25, the MAC of the UE may receive a transmission request from a sidelink HARQ entity (S2501). Here, the MAC layer of the UE may determine whether the requested transmission is an initial transmission (S2502). For example, when the requested transmission is the initial transmission (S2503), the MAC layer of the UE may store a MAC PDU and a sidelink grant (S2504), and may perform LBT check in SL BWP (S2505). Then, the MAC layer of the UE may select a resource pool within an LBT bandwidth (or RB set) in which LBT is successful (S2506), and may perform a transmission (S2507). Here, the MAC layer of the UE may instruct the physical layer of the UE to transmit SCI based on sidelink transmission information. Also, the MAC layer of the UE may instruct the physical layer of the UE to generate a transmission.

On the other hand, when the requested transmission is not the initial transmission (S2508), the MAC layer of the UE may perform a retransmission (S2508). Then, the MAC layer of the UE may store the sidelink grant (S2509), and may perform LBT check in the SL BWP (S2510). Then, the MAC layer of the UE may perform the transmission based on LBT success (S2507). Here, the MAC layer of the UE may instruct the physical layer of the UE to transmit SCI based on sidelink transmission information. Also, the MAC layer of the UE may instruct the physical layer of the UE to generate a transmission.

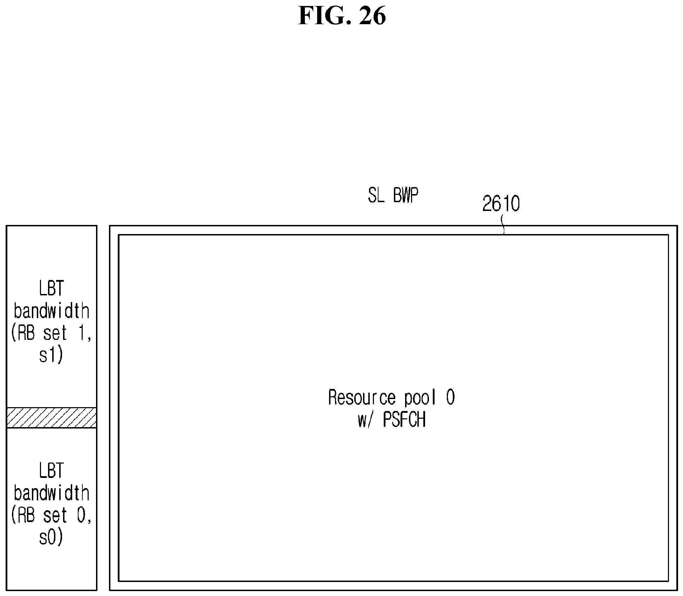

As another example, FIG. 26 illustrates an SL BWP that includes a plurality of resource block (RB) sets. Referring to FIG. 26, resource pool configuration within the SL BWP may be configured to include a plurality of LBT bandwidths (or RB sets) at all times. However, it is only an example and may not be limited thereto. For example, although a resource pool 2610 is configured with the plurality of LBT bandwidths (or RB sets), the UE may select a resource pool based on a HARQ feedback enable/disable status of an LCH as described above. Here, if the resource pool 2610 includes the plurality of LBT bandwidths (or RB sets), a transmission opportunity selection operation for the initial transmission (or retransmission) of the UE may be problematic. In detail, after selecting the resource pool, the UE may randomly select the transmission opportunity for the initial transmission (or retransmission) from among resource sets (or resources) indicated by the physical layer of the UE. For example, the UE may implicitly recognize in which LBT bandwidth (or RB set) a corresponding resource is included, but the UE may select the transmission opportunity without considering an LBT success status. Therefore, if the UE randomly selects a resource in which LBT is not successful, the UE may not perform a transmission although the UE randomly selects the resource within the resource pool. In detail, for example, in FIG. 26, the resource pool 0 2610 may include two LBT bandwidths (or RB sets). The UE may select the resource pool 0 2610 and may randomly select a resource set (or resource) included in two LBT bandwidths (or RB sets). Here, if the UE selects the resource pool 0 2610, randomly selects a resource included in RB set 0, and thereby determines a transmission opportunity, the UE may perform the transmission only when the UE succeeds in LBT in the corresponding RB set 0. For example, if LBT is a failure in RB set 0, and LBT is a success in RB set 1, the UE needs to select a resource in RB set 1 rather than in RB set 0 to perform a transmission. That is, the UE may need to perform a transmission opportunity selection by considering LBT-related information. In detail, the UE may perform a transmission opportunity selection by considering LBT results, an LBT counter, and a candidate transmission opportunity for each RB set (or LBT bandwidth), which is described below.

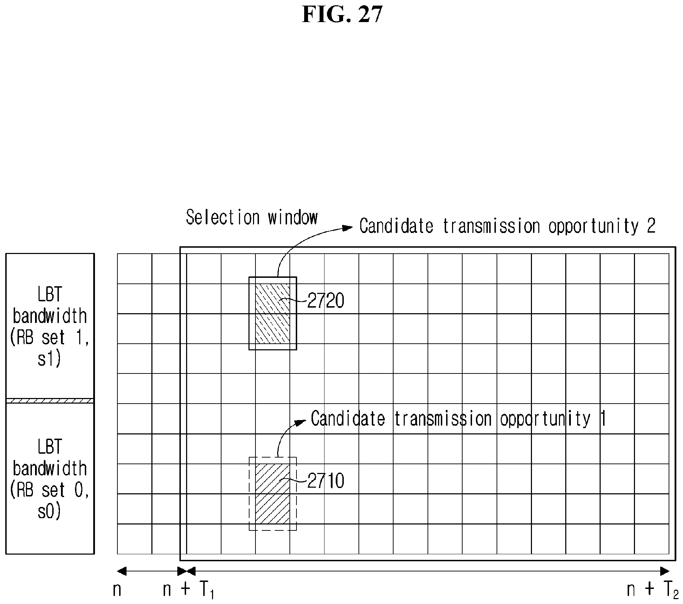

For example, FIG. 27 illustrates a method of selecting a transmission opportunity based on a candidate transmission opportunity, applicable to the present disclosure. Referring to. FIG. 27, when a UE selects the transmission opportunity, the UE may select an available candidate resource 2710, 2720 for each LBT bandwidth (or RB set). In detail, for example, when the UE performs a SCI and data transmission, a MAC layer of the UE may receive a report on LBT results from a physical layer of the UE and may determine a resource to be used for actual transmission among candidate resources. For example, in FIG. 27, if the UE fails in LBT in RB set 1 and succeeds in LBT in RB set 0, the UE may determine candidate transmission resource 1 2710 as a transmission opportunity. On the other hand, if the UE fails in LBT in RB set 0 and succeeds in RB set 1, the UE may determine candidate transmission resource 2 2720 as a transmission opportunity. As another example, if the UE succeeds in LBT in both RB set 0 and RB set 1, the UE may determine one of the candidate transmission resource 1 2710 and the candidate transmission resource 2 2720 as the transmission opportunity.

That is, if the UE succeeds in LBT only in one LBT bandwidth (or RB set), the UE may determine a candidate resource within an RB set in which LBT is successful as a transmission opportunity. On the other hand, if the UE succeeds in LBT in a plurality of LBT bandwidths (or RB sets), the UE may determine one of candidate resources as the transmission opportunity. Here, for example, when the UE may verify an LBT counter value in the LBT bandwidth (or RB set), the UE may select a resource within the RB set having a small LBT counter value, but it may not be limited thereto.

As another example, the UE may set a candidate resource for the LBT bandwidth (or RB set). As described above, the candidate resource may be determined for each LBT bandwidth (or RB set), and candidate resources for a plurality of LBT bandwidths (or RB sets) may also be determined. If the UE succeeds in LBT in the plurality of LBT bandwidths (or RB sets), the UE may determine candidate resources for the plurality of LBT bandwidths (or RB sets) as transmission opportunity, but it may not be limited thereto.

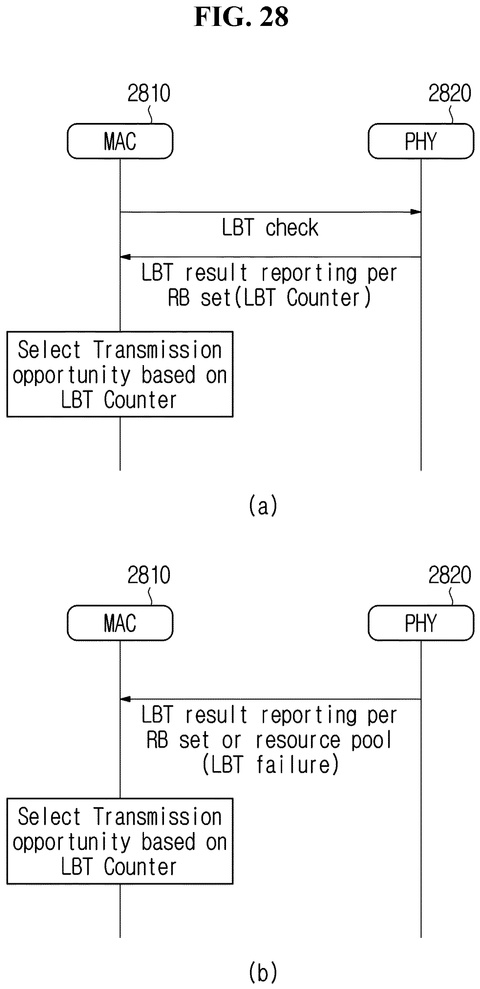

FIG. 28 illustrates a method of determining a transmission opportunity based on an LBT operation, applicable to the present disclosure. Referring to FIG. 28, a UE may determine a transmission opportunity based on LBT. In detail, for example, referring to (a) of FIG. 28, a MAC layer 2810 of the UE may select a transmission opportunity based on LBT results. The MAC layer 2810 of the UE may request a physical layer 2820 of the UE for LBT check, and may receive a report on the LBT results for each RB set, based on this. Here, the MAC layer 2810 of the UE may select a resource within an LBT bandwidth (or RB set) in which LBT is successful. For example, as shown in FIG. 26, when the UE selects the transmission opportunity in a case in which a single resource pool is configured in an SL BWP that includes a plurality of LBT bandwidths (or RB sets), the MAC layer of the UE may perform a transmission opportunity selection based on the LBT results reported from the physical layer of the UE. For example, if LBT success is reported in RB set 0, and LBT failure is reported in RB set 1, the MAC layer 2810 of the UE may select the transmission opportunity within the RB set 0.

Also, for example, referring to (b) of FIG. 28, the MAC layer 2810 of the UE may select the transmission opportunity based on an LBT counter value. For example, the physical layer 2820 of the UE may continuously report the LBT results to the MAC layer 2810 of the UE for each LBT bandwidth (or RB set). Here, the MAC layer 2820 of the UE may select the transmission opportunity based on an LBT counter value reported for each LBT bandwidth (or RB set). For example, as shown in FIG. 26, when the UE selects the transmission opportunity in which a single resource pool is configured in an SL BWP that includes a plurality of RB sets, the MAC layer of the UE may perform the transmission opportunity selection through an LBT failure counter value based on LBT results reported from the physical layer of the UE. For example, if the LBT counter value of RB set 0 is less than the LBT counter value of RB set 1, the MAC layer 2810 of the UE may select the transmission opportunity within RB set 0.

As another example, the UE may select a HARQ retransmission resource in a resource pool in which PSFCH resources are configured. Here, the UE may need to ensure an interval between two resources selected to consider a processing time of HARQ feedback transmission and reception by a minimum time gap. For example, the minimum time gap may be as shown in Table 14 below. Here, a maximum channel occupancy time (MCOT) limit may be set to the sidelink unlicensed band. That is, the UE may perform sidelink communication based on MCOT as a limited time in consideration of using the unlicensed band. Here, the UE may not perform HARQ feedback transmission and reception due to MCOT limit and may require scheduling in consecutive sidelink slots by considering this. Considering the above, the UE may select a resource without considering the minimum time gap and this is described below.

[Table 14]

| |
|---|
| - a time gap between the end of the last symbol of a PSSCH transmission of the first resource and the start of the first symbol of the corresponding PSFCH reception determined by sl-MinTimeGapPSFCH and sl-PSFCHPeriod for the pool of resources; and |
| - a time required for PSFCH reception and processing plus sidelink retransmission preparation including multiplexing of necessary physical channels and any TX-RX/RX-TX switching time. |

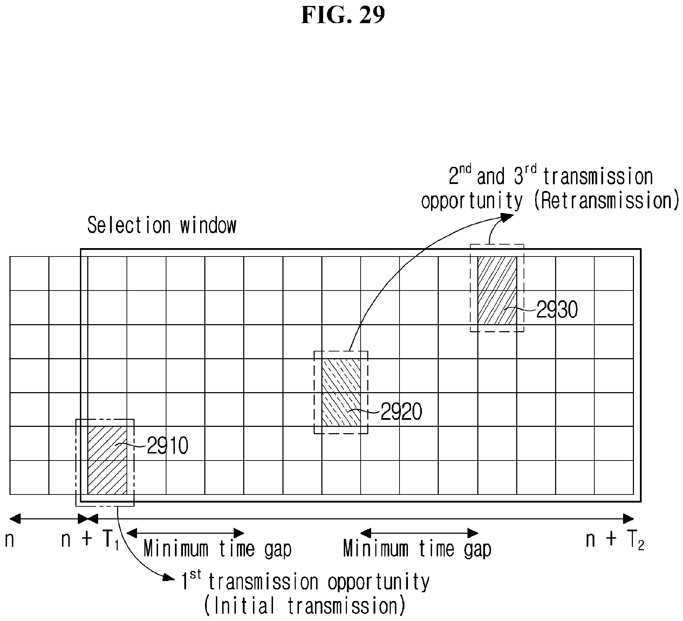

For example, the MAC layer of the UE may select the number of one or more HARQ retransmissions. Here, when available resources remain among resources indicated by the physical layer of the within the resource pool, the MAC layer of the UE may select resources by considering a sidelink DRX active time of a destination UE, an amount of frequency resources, the number of retransmission resources, remaining PDB of LCH data, and SL-SCI latency requirement. For example, when the MAC layer of the UE selects resources, the aforementioned minimum time gap may be ensured between two resources as the selected resources, which is as shown in FIG. 29. For example, FIG. 29 illustrates a case in which a minimum time gap is guaranteed in a transmission opportunity, applicable to the present disclosure. Referring to FIG. 29, the minimum time gap may be set between the respective transmission opportunities 2910, 2920, and 2930 by considering a processing time of transmission and reception. Here, the selected resources may be determined as transmission opportunities. For example, the very first resource may be determined as an initial transmission opportunity and remaining resources may be determined as retransmission opportunities. Also, all transmission opportunities may be determined as a selected sidelink grant. For example, when an inter UE coordination function is activated in the UE, the MAC layer of the UE may select resources within a preferred resource set and a resource set indicated by the physical layer.

Also, for example, retransmission resources may be indicated through time resource assignment within 1st SCI, and may be expressed as 5 bits if sl-MaxNumperReserve that is a higher layer parameter indicating the number of retransmission resources is 2. Also, they may be expressed as 9 bits if sl-MaxNumperReserve that is a higher layer parameter indicating the number of retransmission resources is 3. For example, if sl-MaxNumperReserve = 3, up to three transmission opportunities may be set, and each transmission opportunity may be indicated in such a manner that a start logical sidelink slot location and a subchannel location are determined according to TRIV indicated through time resource assignment and FRIV indicated through frequency resource assignment.

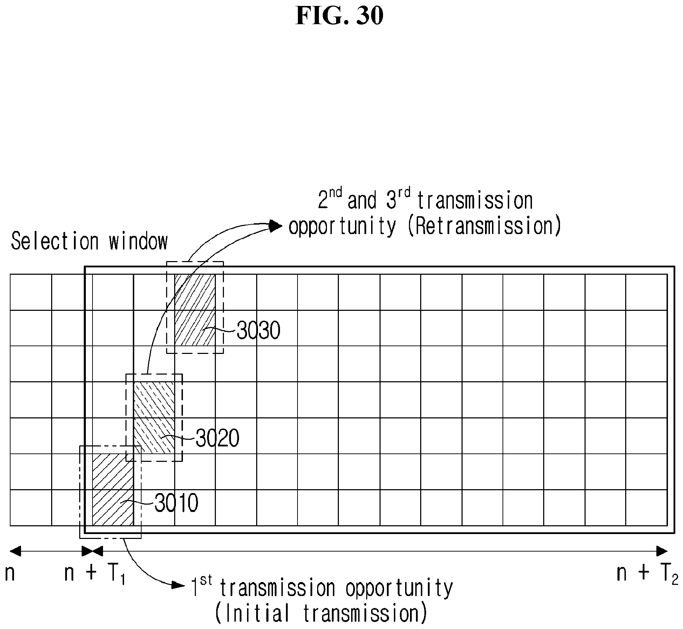

On the other hand, the aforementioned MCOT may be present in the unlicensed band. For example, when two resources are selected, the two resources may be limited in being selected while ensuring the minimum time gap within the MCOT. Considering the above, a transmission opportunity with the selected two resources may be determined as consecutive slots. In detail, FIG. 30 illustrates a method of determining a transmission opportunity using consecutive slots in an unlicensed band, applicable to the present disclosure. Referring to FIG. 30, a transmission opportunity 3010, 3020, 3030 may be determined as consecutive slots. The UE may select at least one retransmission and may select an available resource from among resources indicated by a physical layer in selecting each resource. Here, the UE may not guarantee the minimum time gap between the selected two resources. For example, the first resource of the resources selected by the UE may be determined as the initial transmission opportunity, and a remaining resource may be determined as a retransmission opportunity. Also, for example, the selected resources may be limited to resources within the MCOT. That is, when the UE occupies a channel through an LBT procedure, the UE may select a transmission opportunity by considering the MCOT capable of occupying the channel. Through the above, a retransmission resource may be selected without satisfying the minimum time gap even in a resource pool in which PSFCH resources are configured.

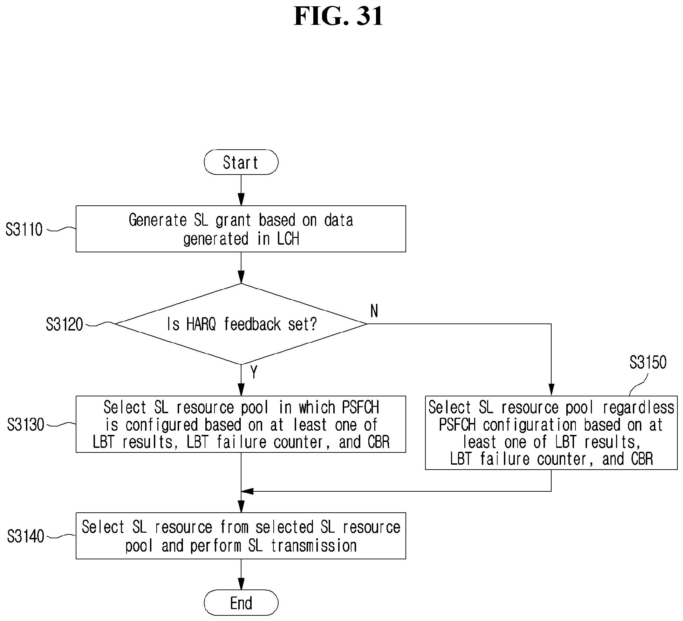

FIG. 31 is a flowchart illustrating a method of performing, by a UE, sidelink communication to which the present disclosure may apply. Referring to FIG. 31, the UE may receive sidelink resource pool configuration information from a base station based on higher layer signaling. Here, if data is generated in an LCH based on the sidelink resource pool configuration information, the UE may generate a sidelink grant (S3110). Here, when HARQ feedback is set to the data generated in the LCH based on the sidelink resource pool configuration information (S3120), the UE may select a sidelink resource pool in which a PSFCH is configured based on at least one of LBT results, an LBT failure counter, and a CBR (S3130). Then, the UE may select a sidelink resource from the selected sidelink resource pool and may perform a sidelink transmission (S3140). On the other hand, when HARQ feedback is not set to the data generated in the LCH based on the sidelink resource pool configuration information (S3120), the UE may select a sidelink resource pool regardless of PSFCH configuration based on at least one of the LBT results, the LBT failure counter, and the CBR (S3150). Then, the UE may select the sidelink resource from the selected sidelink resource pool and may perform the sidelink transmission (S3140).

Here, for example, as described above, the UE may select a resource pool from among one or more sidelink resource pools included in an LBT bandwidth that occupies a channel by succeeding in LBT, based on the LBT results. As another example, as described above, the UE may select a sidelink resource pool from among one or more sidelink resource pools included in an LBT bandwidth of which an LBT counter is less than a preset value, based on the LBT counter.

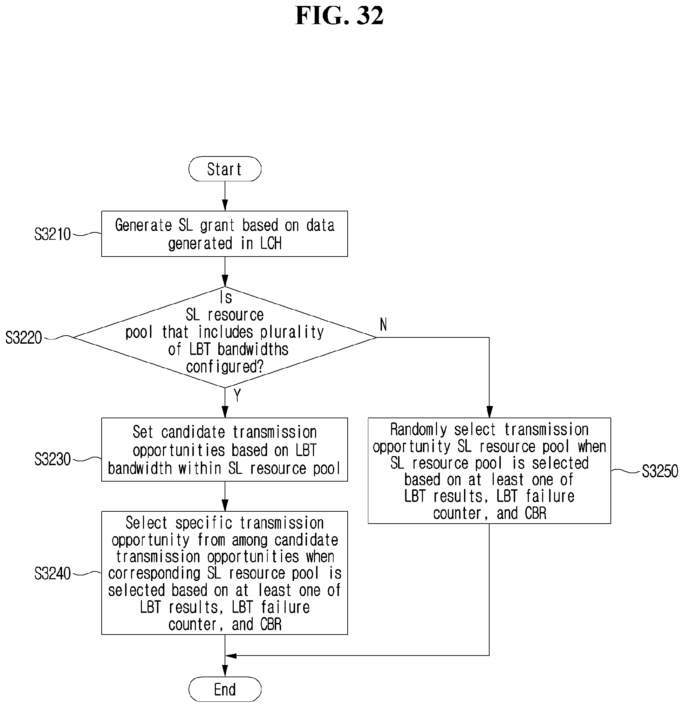

FIG. 32 is a flowchart illustrating a method of performing, by a UE, sidelink communication to which the present disclosure may apply. Referring to FIG. 32, the UE may generate a sidelink grant based on data generated in an LCH (S3210). For example, when a sidelink resource pool that includes a plurality of LBT bandwidths is configured to the UE based on sidelink resource pool configuration information (S3220), the UE may set candidate transmission opportunities based on an LBT bandwidth within the sidelink resource pool (S3230). For example, each candidate transmission opportunity may be set for each LBT bandwidth, but it is not limited thereto. Then, the UE may select the sidelink resource pool that includes the plurality of LBT bandwidths based on at least one of LBT results, an LBT failure counter, and a CBR. Here, the UE may select a specific transmission opportunity from among the candidate transmission opportunities based on at least one of the LBT results, the LBT failure counter, and the CBR (S3240). On the other hand, when a sidelink resource pool that includes a single LBT bandwidth is configured to the UE (S3220), the UE may select the sidelink resource pool based on at least one of the LBT results, the LBT failure counter, and the CBR, and may randomly select the transmission opportunity from the selected sidelink resource pool, which is described above (S3250).

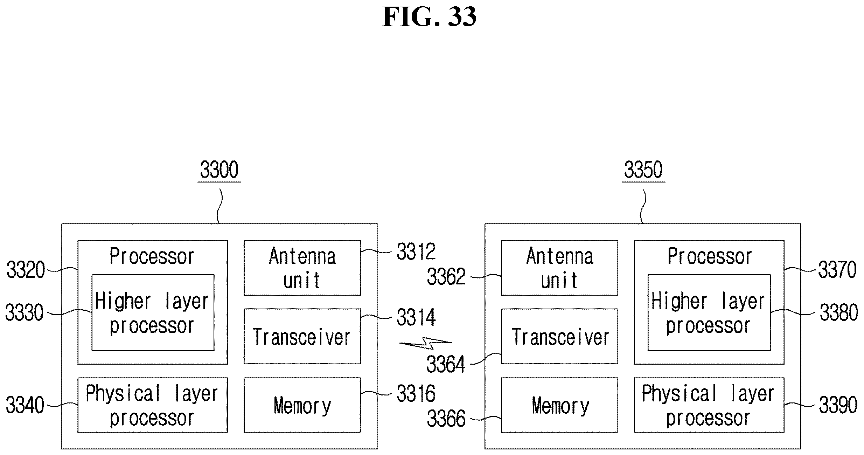

FIG. 33 is a diagram illustrating a base station apparatus and a UE apparatus to which the present disclosure may be applied.

The base station device 3300 may include a processor 3320, an antenna unit 3312, a transceiver 3314, and a memory 3316.

The processor 3320 performs a baseband-related signal processing and may include a higher layer processor 3330 and a physical layer processor 3340. The higher layer processor 3330 may process the operation of a medium access control (MAC) layer, a radio resource control (RRC) layer, or a higher layer thereof. The physical layer processor 3340 may process the operation of the physical (PHY) layer (e.g., uplink receive signal processing, downlink transmission signal processing). Also, to perform baseband-related signal processing, the processor 3320 may also control the operation of the base station device 3300 as a whole.

The antenna unit 3312 may include one or more physical antennas, and may support the multiple input multiple

output (MIMO) transmission and reception in the case of including a plurality of antennas. Also, beamforming can be supported.

The memory 3316 may store computationally processed information of the processor 3320, software, operating systems, applications, and the like related to the operation of the base station device 3300, and may include components such as buffers.

The processor 3320 of the base station 3300 may be configured to implement the operation of the base station in the example described herein.

The UE device 3350 may include a processor 3370, an antenna unit 3362, a transceiver 3364, and a memory 3366. For example, herein, the UE device 3350 may perform communication with the base station device 3300. As another example, herein, the UE device 3350 may perform SL communication with another UE device. That is, the UE device 3350 used herein refers to a device capable of communicating with at least one of the base station device 3300 and the other UE devices and is not limited to communication with a specific device.

The processor 3370 performs baseband-related signal processing and may include a higher layer processor 3380 and a physical layer processor 3390. The higher layer processor 3380 may process the operation of the MAC layer, the RRC layer, or the higher layer. The physical layer processor 3390 may process the operations of the PHY layer (e.g., downlink receive signal processing, uplink transmission signal processing). Also, to perform baseband-related signal processing, the processor 3370 may also control the operation of the UE device 3350 as a whole.

The antenna unit 3362 may include one or more physical antennas, and may support MIMO transmission and reception in the case of including a plurality of antennas. Also, beamforming can be supported.

The memory 3366 may store computationally processed information of the processor 3370, software, operating systems, applications, and the like related to the operation of the UE device 3350, and may include components such as buffers.

The terminal device 3350 according to an example of the present disclosure may be associated with a vehicle. For example, the terminal device 3350 may be integrated in the vehicle, may be located in the vehicle, or may be located on the vehicle. Also, the terminal device 3350 according to the present disclosure may be the vehicle itself. Also, the terminal device 3350 according to the present disclosure may be at least one of a wearable terminal, AR/VR, an Internet of things (IoT) terminal, a robot terminal, and a public safety terminal. The terminal device 3350 to which the present disclosure may apply may include various types of communication devices that support an interactive service using sidelink, for services, for example, Internet access, service execution, navigation, real-time information, autonomous driving, and safety-and-risk diagnosis. Also, the terminal device 3350 may include an AR/VR device capable of performing a sidelink operation or any type of communication devices capable of performing a relay operation as a sensor.

Here, the vehicle to which the present disclosure applies may include an autonomous vehicle, a semi-autonomous vehicle, and a non-autonomous vehicle. Meanwhile, although the terminal device 3350 according to an example of the present disclosure is described in association with the vehicle, at least one of the UEs may not be associated with the vehicle. It is provided as an example only and should not be interpreted to limit application of the present disclosure.

Also, the terminal device 3350 according to an example of the present disclosure may include various types of communication devices capable of performing cooperation that supports an interactive service using sidelink. That is, the terminal device 3350 may directly support the interactive service using the sidelink and may be employed as a cooperation device for supporting the interactive service using the sidelink.

Also, for example, the terminal device 3350 may receive sidelink resource pool configuration information from the base station device 3300 based on higher layer signaling. Here, if data is generated in an LCH based on the sidelink resource pool configuration information, the terminal device 3350 may generate a sidelink grant. Here, when HARQ feedback is set to the data that is generated in the LCH based on the sidelink resource pool configuration information, the terminal device 3350 may select a sidelink resource pool in which a PSFCH is configured based on at least one of LBT results, an LBT failure counter, and a CBR. Then, the terminal device 3350 may select a sidelink resource from the selected sidelink resource pool and may perform a sidelink transmission. On the contrary, when HARQ feedback is not set to the data generated in the LCH based on the sidelink resource pool configuration information, the terminal device 3350 may select a sidelink resource pool regardless of PSFCH configuration based on at least one of the LBT results, the LBT failure counter, and the CBR. Then, the terminal device 3350 may select the sidelink resource from the selected sidelink resource pool, and may perform a sidelink transmission. Also, for example, when the sidelink resource pool that includes a plurality of LBT bandwidths is configured to the terminal device 3350 based on the sidelink resource pool configuration information, the terminal device 3350 may set a candidate transmission opportunity based on the LBT bandwidth within the sidelink resource pool. Then, the terminal device 3350 may select the sidelink resource pool that includes the plurality of LBT bandwidths based on at least one of the LBT results, the LBT failure counter, and the CBR. Here, the terminal device 3350 may select a specific transmission opportunity from among candidate transmission opportunities based on at least one of the LBT results, the LBT failure counter, and the CBR.

Also, various examples of the present disclosure may be implemented by hardware, firmware, software, or combination thereof. In the case of implementation by hardware, the examples may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present invention includes software or machine executable instructions (for example, operating system, application, firmware, program, etc.) for enabling to implement operations according to the methods of the various embodiments, and a device or a non-transitory computer-readable medium executable on a computer storing such a software or instructions.

Various embodiments of the present disclosure are to explain representative aspect of the present disclosure rather than listing all possible combinations and description made in the various embodiments may be independently applied or may be applied in combination of two or more.

INDUSTRIAL APPLICABILITY

The above matters may apply to other systems.

**Claims**

1. A sidelink communication method of performing, by a user equipment (UE), unlicensed band sidelink communication in a wireless communication system, the method comprising:

   receiving, by the UE, sidelink resource pool configuration information from a base station based on higher layer signaling;
   generating a sidelink (SL) grant if data is generated in a logical channel (LCH) based on the sidelink resource pool configuration information;
   selecting a sidelink resource pool depending on whether hybrid automatic repeat and request (HARQ) feedback is configured to the data that is generated in the LCH based on the sidelink resource pool configuration information; and
   selecting a sidelink resource from the selected sidelink resource pool, and performing sidelink transmission, wherein the UE performs a listen before talk (LBT) operation of the unlicensed band in the process of selecting the sidelink resource pool, and performs the sidelink resource pool selection based on at least one of LBT results, an LBT failure counter, and a channel busy ratio (CBR).

2. The sidelink communication method of claim 1, wherein, when the HARQ feedback is configured to the UE, the UE selects the sidelink resource pool from among one or more sidelink resource pools in which a physical sidelink feedback channel (PSFCH) is configured, and
   when the HARQ feedback is not configured to the UE, the UE selects the sidelink resource pool from among the one or more sidelink resource pools regardless of whether the PSFCH is configured.

3. The sidelink communication method of claim 2, wherein the UE selects the resource pool from among one or more resource pools included in an LBT bandwidth in which LBT is successful, based on the LBT results.

4. The sidelink communication method of claim 3, wherein the UE selects the resource pool from among the one or more resource pools included in an LBT bandwidth in which an LBT counter is less than a preset value based on the LBT counter.

5. The sidelink communication method of claim 1, wherein, when a first sidelink resource pool that includes a plurality of LBT bandwidths is configured to the UE, at least one candidate transmission opportunity is configured in the first sidelink resource pool that includes the plurality of LBT bandwidths, based on each LBT bandwidth, and
   when the first sidelink resource pool is selected based on at least one of the LBT results, the LBT failure counter, and the CBR, the UE selects a first transmission opportunity from among the one or more candidate transmission opportunities within the first sidelink resource pool based on at least one of the LBT results, the LBT failure counter, and the CBR.

# FIG. 1

| Downlink frame *i* |
|---|

| Uplink frame *i* |
|---|

$N_{TA} T_s$

# FIG. 2

One sub frame

$N_{\text{sub frame}}^{\text{symbols}\mu}$ OFDM symbols

$k = N_{RB}^{\mu} N_{sc}^{RB} - 1$

Resource block

Resource element
$-(k,\bar{l})$ in resource grid
$-(k,l)$ in resource block

$N_{RB}^{\mu} N_{sc}^{RB}$ subcarriers

$N_{sc}^{RB}$ subcarriers

$k = 0$

$l = 0$

$\bar{l} = 14 \cdot 2^{\mu} - 1$

# FIG. 3

**FIG. 4**

| | | | | | C-V2X | |
|---|---|---|---|---|---|---|
| V2V | Reserved | Reserved | Tolling | Control | I2V | PVD/Security |
| CH 1 | CH 2 | CH 3 | CH 4 | CH 5 | CH 6 | CH 7 |

5,855    5,865    5,875    5,885    5,895    5,905    5,915    5,925 MHz

EP 4 598 173 A1

# FIG. 5

sl-TimeResource(length = $L_{bitmap}$)
(e.g.,0011111100)

Frequency(RBs)

sl-RB-Number

sl-StartRBsubchannel

sl-SubchannelSize

Time(slots)

$10240 \times 2^{\mu}$

SL BWP
Excluded RB
Reserved slot
Excluded slot
SSB slot

EP 4 598 173 A1

**FIG. 6**

EP 4 598 173 A1

**FIG. 7**

| U-NII-1 (100 MHz) | U-NII-2A (100 MHz) | U-NII-2B (120 MHz) | U-NII-2C (255 MHz) | U-NII-3 (100 MHz) / Part 15.247 Rules (125 MHz) | 25 MHz | U-NII-4 (75 MHz) |
|---|---|---|---|---|---|---|

5.150 GHz    5.250 GHz    5.350 GHz    5.470 GHz                5.725 GHz        5.850 GHz   5.925 GHz

EP 4 598 173 A1

**FIG. 8**

# FIG. 9

911

923  922

Carrier bandwidth | LBT bandwidth(RB set1,s1)

$RB^{end,\mu}_{s1,uplink}$

$$RB^{start,\mu}_{s,x} = N^{start,\mu}_{grid,x} + \begin{cases} 0 & s = 0 \\ GB^{start,\mu}_{s-1,x} + GB^{size,\mu}_{s-1,x} & otherwise \end{cases}$$

$$RB^{end,\mu}_{s,x} = N^{start,\mu}_{grid,x} + \begin{cases} N^{size,\mu}_{grid,x} & s = N_{RB-set,x}-1 \\ GB^{start,\mu}_{s,x} & otherwise \end{cases}$$

BWP 3

913

nrofCRB(0..15)

startCRB(0..274), $GB^{start,\mu}_{s0,x}$

Guardband

$RB^{start,\mu}_{s1,uplink}$

$RB^{end,\mu}_{s0,uplink}$

BWP 2

LBT bandwidth(RB set0,s0)

$$N^{size,\mu}_{BWP,i} = RB^{end,\mu}_{s1,uplink} - RB^{start,\mu}_{s0,uplink}$$

BWP 1

$RB^{start,\mu}_{s0,uplink}$

912

$$N^{start,\mu}_{BWP,i} = RB^{start,\mu}_{s0,uplink}$$

921

# FIG. 10

ISM
3.5

CBRS
3.5

UNII
5.15 5.925 7.125

57

mmWave ISM
64          71

GHz

# FIG. 11

sl-TimeResource (length = $L_{bitmap}$)
(e.g., 0011111100)

Frequency (RBs)

sl-RB-Number

sl-StartRBsubchannel

sl-SubchannelSize

... ... ... ...

Time (slots)

$10240 \times 2^{\mu}$

| | SL BWP | | Reserved slot |
| | Excluded RB | | Excluded slot |
| | SSB slot | | |

EP 4 598 173 A1

# FIG. 12

- Mode 2: Selected autonomously by MAC entity

- MAC entity selects whether multiple or single MAC PDU is used for a logical channel

MAC entity

Start

S1201
SL grant generation

S1202
Multiple MAC PDU

S1207
Single MAC PDU

S1203
RP is selected?

No

S1208
RP selection

S1204
Select any RP according to sl-HARQ-FeedbackEnabled

Yes  S1205
TX resource selection

S1206
Deliver SL grant to HARQ entity

End

EP 4 598 173 A1

# FIG. 13

```
                                    ( Start )
                                        |  S1301
                                        v
                            ┌───────────────────────┐
                            │  Receive sidelink grant │
                            │     from MAC entity     │
                            └───────────────────────┘
                                        |  S1302
             No                         v
       ┌────────────────────< Sidelink grant is >
       |                        for initial tx?
       |                              |  Yes  S1310
       |  S1303                       v
       v                      ┌─────────────────┐
┌──────────────────┐         │  Re-transmission  │
│ Initial transmission│        └─────────────────┘
└──────────────────┘                  |  S1311
       |  S1304                        v
       v                      ┌───────────────────────┐
┌──────────────────────┐     │ Associate a Sidelink process│
│Associate a Sidelink process│   └───────────────────────┘
└──────────────────────┘              |  S1312
       |                               v
       v                      ┌─────────────────────┐
          MAC   S1305         │ Deliver the sidelink grant│
   No   PDU is obtained        └─────────────────────┘
 ┌────< from Multiplexing               |  S1313
 |       and assembly                   v
 |         entity?            ┌───────────────────────┐
 |            |  Yes  S1307   │   Instruct the associated  │
 |  S1306     v               │     Sidelink process to    │
 v    ┌───────────────────┐   │   trigger a retransmission │
┌──────────┐ │Determine sidelink │  └───────────────────────┘
│Flush the HARQ│transmission information│        |
│buffer of the assoicated└───────────────┘        |
│ sidelink process│       |  S1308                |
└──────────┘            v                        |
 |          ┌────────────────────┐               |
 |          │  Deliver the MAC PDU,  │            |
 |          │   the sidelink grant,   │           |
 |          │     and the sidelink    │           |
 |          │ transmission information │           |
 |          └────────────────────┘               |
 |                     |  S1309                   |
 |                     v                          |
 |          ┌────────────────────┐               |
 |          │   Instruct the associated │          |
 |          │     Sidelink process to    │         |
 |          │  trigger a new transmission │        |
 |          └────────────────────┘               |
 |                     |                          |
 └─────────────────────┴──────────────────────────┘
                       |
                       v
                   ( End )
```

MAC entity

# FIG. 14

Start

S1401

Receive transmission request
from sidelink HARQ entity

S1402

Requested
transmission is Initial
tx?

Yes

S1403

Initial transmission

S1404

Store the MAC PDU and
the sidelink grant

No    S1406

Re-transmission

S1407

Store
the sidelink grant

S1405

Generate transmission
- Instruct the physical layer to transmit SCI
  according to the sidelink transmission information
- Instruct the physical layer to generate
  a transmission

Sidelink process

End

# FIG. 15

SL BWP

1510                                      1520

| LBT bandwidth | Resource pool 1 w/ PSFCH | Resource pool 2 w/o PSFCH |
|---|---|---|

(a)

1530

| LBT bandwidth | Resource pool 1 & 2 RP1 w/o PSFCH RP2 w/ PSFCH |
|---|---|

(b)

# FIG. 16

SL BWP

1610                        1620                1630

LBT bandwidth (RB set 1, s1)

Resource pool 0 w/ PSFCH

Resource pool 1 w/o PSFCH

Resource pool 0 w/ PSFCH

LBT bandwidth (RB set 0, s0)

Resource pool 2 w/ PSFCH

Resource pool 3 w/o PSFCH

1640                       1650

(a)

SL BWP

1660                     1670

LBT bandwidth (RB set 1, s1)

Resource pool 0 w/ PSFCH

Resource pool 3 w/ PSFCH

LBT bandwidth (RB set 0, s0)

Resource pool 2 w/o PSFCH

1680

# FIG. 17

# FIG. 18

Start

S1801
SL grant generation

- Mode 2: Selected autonomously by MAC entity

- MAC entity selects whether multiple or single MAC PDU is used for a logical channel

S1802
Multiple MAC PDU

S1807
Single MAC PDU

S1808
LBT result based RP selection

S1803
RP is selected?

No →

S1804
Select any LBT succeed RP according to sl-HARQ-FeedbackEnabled

Yes
S1805
TX resource selection

S1806
Deliver SL grant to HARQ entity

End

MAC entity

EP 4 598 173 A1

# FIG. 19

1910

1920

MAC

PHY

LBT result reporting
per RB set or resource
pool (LBT failure)

# FIG. 20

Start

S2001

SL grant generation — Mode 2: Selected autonomously by MAC entity

— MAC entity selects whether multiple or single MAC PDU is used for a logical channel

S2002
Multiple MAC PDU

S2007
Single MAC PDU

S2003
RP is selected?

S2008
LBT counter based RP selection according to sl-HARQ-FeedbackEnabled

No

Yes

S2004
Select RP with lowest LBT failure counter according to sl-HARQ-FeedbackEnabled

S2005
TX resource selection

S2006
Deliver SL grant to HARQ entity

End

MAC entity

EP 4 598 173 A1

**FIG. 21**

SCI format 1-A in $t_m^{SL}$ slot
- Resource reservation period $(P_{rsvp\_RX})$=6ms
- Priority$(Prio_{RX})$

$t_{m+1 \times P'_{rsvp}}^{SL}{}_{RX}$   $t_{m+2 \times P'_{rsvp}}^{SL}{}_{RX}$   $t_{m+3 \times P'_{rsvp}}^{SL}{}_{RX}$

CBR window

$\cdots \cdots \cdots$

$n - T_0$   $n - T_{proc,0}^{SL}$   $n$   $n + T_1$   $T_{proc,1}^{SL}$   $n + T_2$

EP 4 598 173 A1

# FIG. 22

2210

| CBR window for RP0, RP1 |
|---|

2230       SL BWP    2240

| LBT bandwidth (RB set 1, s1) | Resource pool 0 w/ PSFCH | Resource pool 1 w/o PSFCH | Resource pool 0 w/ PSFCH |
|---|---|---|---|

| CBR window for RP2, RP3 |
|---|

| LBT bandwidth (RB set 0, s0) | Resource pool 2 w/ PSFCH | Resource pool 3 w/o PSFCH |
|---|---|---|

2220

2250      2260

# FIG. 23

SL BWP

2310 — Resource pool 0 w/ PSFCH

2320 — Resource pool 1 w/o PSFCH

LBT bandwidth (RB set 1, s1)

LBT bandwidth (RB set 0, s0)

Resource pool 2 w/ PSFCH

Resource pool 3 w/ PSFCH

2330

2340

# FIG. 24

Start

S2401 — Mode 2: Selected autonomously
by MAC entity

SL grant generation

— MAC entity selects whether
multiple or single MAC PDU
is used for a logical channel

S2402 — Multiple MAC PDU

S2407 — Single MAC PDU

S2403 — RP is selected?

No → S2404 — Select candidate RP according to sl-HARQ-FeedbackEnabled

Yes → S2405 — TX resource selection on each candidate RP

S2408 — Select candidate RP according to sl-HARQ-FeedbackEnabled

S2406 — Deliver SL grant to HARQ entity

End

MAC entity

# FIG. 25

```
                                    ┌─────────┐
                                    │  Start  │
                                    └─────────┘
                                         │                    S2501
                                         ▼
                          ┌──────────────────────────────┐
                          │ Receive transmission request │
                          │   from sidelink HARQ entity   │
                          └──────────────────────────────┘
                                         │
                                         ▼                   S2502
                   Yes              ◇ Requested ◇
              ┌─────────────────────  transmission is Initial
              │                          tx?
              │                         │ No              S2508
   S2503      ▼                         ▼
┌──────────────────────┐   ┌──────────────────────────┐
│ Initial transmission │   │      Re-transmission      │
└──────────────────────┘   └──────────────────────────┘
              │ S2504                   │ S2509
              ▼                         ▼
┌──────────────────────┐   ┌──────────────────────────┐
│  Store the MAC PDU and│   │          Store            │
│   the sidelink grant  │   │    the sidelink grant     │
└──────────────────────┘   └──────────────────────────┘
              │ S2505                   │ S2510
              ▼                         ▼
┌──────────────────────┐   ┌──────────────────────────┐
│  LBT check on SL BWP │   │    LBT check on SL BWP    │
└──────────────────────┘   └──────────────────────────┘
              │ S2506                   │
              ▼                         │
┌──────────────────────┐               │
│ Select final RP within│              │
│  LBT succeed RB set   │              │
└──────────────────────┘               │
              │                         │           S2507
              └───────────┬─────────────┘
                          ▼
┌──────────────────────────────────────────────────────────┐
│                 Generate transmission                     │
│ - Instruct the physical layer to transmit SCI            │
│   according to the sidelink transmission information     │
│ - Instruct the physical layer to generate                │
│   a transmission                                          │
└──────────────────────────────────────────────────────────┘
                          │
                          ▼
                    ┌─────────┐
                    │   End   │
                    └─────────┘
```

Sidelink process

# FIG. 26

SL BWP          2610

| LBT bandwidth (RB set 1, s1) | |
| --- | --- |
| | Resource pool 0 w/ PSFCH |
| LBT bandwidth (RB set 0, s0) | |

**FIG. 27**

# FIG. 28

2810                                    2820

MAC                                    PHY

LBT check

LBT result reporting per
RB set(LBT Counter)

Select Transmission
opportunity based on
LBT Counter

(a)

2810                                    2820

MAC                                    PHY

LBT result reporting per
RB set or resource pool
(LBT failure)

Select Transmission
opportunity based on
LBT Counter

(b)

# FIG. 29

2nd and 3rd transmission opportunity (Retransmission)

Selection window

2930

2920

2910

n        n + T₁     Minimum time gap     Minimum time gap     n + T₂

1st transmission opportunity
(Initial transmission)

# FIG. 30

# FIG. 31

```
                          ( Start )
                              │
                              ▼
         ┌────────────────────────────────────────┐
  S3110 ─┤   Generate SL grant based on data       │
         │        generated in LCH                  │
         └────────────────────────────────────────┘
                              │
                              ▼
                       ╱────────────╲                    N
  S3120 ──────────────< Is HARQ feedback set? >──────────────────┐
                       ╲────────────╱                            │
                              │ Y                                 │
                                                          S3150   │
                              ▼                                   ▼
         ┌──────────────────────────────┐   ┌──────────────────────────────┐
  S3130 ─┤ Select SL resource pool in    │   │ Select SL resource pool       │
         │ which PSFCH is configured      │   │ regardless PSFCH              │
         │ based on at least one of       │   │ configuration based on at     │
         │ LBT results, LBT failure       │   │ least one of LBT results,     │
         │ counter, and CBR               │   │ LBT failure counter, and CBR  │
         └──────────────────────────────┘   └──────────────────────────────┘
                              │                         │
                              │◄────────────────────────┘
                              ▼
         ┌──────────────────────────────┐
  S3140 ─┤ Select SL resource from        │
         │ selected SL resource pool and  │
         │ perform SL transmission        │
         └──────────────────────────────┘
                              │
                              ▼
                          ( End )
```

# FIG. 32

```
                    ( Start )
                        │
                        ▼
        ┌───────────────────────────────┐
S3210 ──┤   Generate SL grant based on data  │
        │       generated in LCH         │
        └───────────────────────────────┘
                        │
                        ▼
                   ╱─────────╲
                  ╱    Is      ╲
                 ╱ SL resource  ╲         N
S3220 ──────────  pool that includes plurality ──────────┐
                 ╲  of LBT bandwidths  ╱                  │
                  ╲ configured?  ╱                        │
                   ╲─────────╱                            │
                        │ Y                               │
                        ▼                                 ▼
        ┌───────────────────────────────┐   ┌───────────────────────────────┐
        │    Set candidate transmission   │   │   Randomly select transmission  │
        │   opportunities based on LBT    │   │ opportunity SL resource pool when│
S3230 ──┤  bandwidth within SL resource pool│  │   SL resource pool is selected  ├── S3250
        └───────────────────────────────┘   │     based on at least one of    │
                        │                    │      LBT results, LBT failure    │
                        ▼                    │       counter, and CBR          │
        ┌───────────────────────────────┐   └───────────────────────────────┘
        │    Select specific transmission │                │
        │   opportunity from among candidate│              │
        │  transmission opportunities when │               │
S3240 ──┤ corresponding SL resource pool is│               │
        │  selected based on at least one of│              │
        │     LBT results, LBT failure    │                │
        │      counter, and CBR           │                │
        └───────────────────────────────┘                 │
                        │                                  │
                        ▼◄─────────────────────────────────┘
                    ( End )
```

**FIG. 33**

EP 4 598 173 A1

## INTERNATIONAL SEARCH REPORT

| | International application No. |
|---|---|
| | **PCT/KR2023/014629** |

**A. CLASSIFICATION OF SUBJECT MATTER**

**H04W 72/02**(2009.01)i; **H04W 72/20**(2023.01)i; **H04W 72/54**(2023.01)i; **H04W 16/14**(2009.01)i; **H04W 74/08**(2009.01)i; **H04W 4/40**(2018.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 72/02(2009.01); H04W 36/00(2009.01); H04W 36/18(2009.01); H04W 72/12(2009.01); H04W 76/23(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비면허 대역(unlicensed spectrum), 사이드링크(sidelink), 자원 풀(resource pool), 논리 채널(logical channel, LCH), 사이드링크 그랜트(sidelink grant, SL grant), HARQ(hybrid automatic repeat and request), LBT(listen before talk)

**C. DOCUMENTS CONSIDERED TO BE RELEVANT**

| Category* | Citation of document, with indication, where appropriate, of the relevant passages | Relevant to claim No. |
|---|---|---|
| A | WO 2022-086091 A1 (SAMSUNG ELECTRONICS CO., LTD.) 28 April 2022 (2022-04-28)<br>See paragraphs [0188]-[0195]. | 1-5 |
| A | NOKIA et al.On Physical Channel Design Framework for SL-U. R1-2203123, 3GPP TSG RAN WG1 #109-e. 29 April 2022.<br>See sections 1-2.3. | 1-5 |
| A | NOKIA et al. On Physical Channel Design Framework for SL-U. R1-2205840, 3GPP TSG RAN WG1 #110. Toulouse, France. 13 August 2022.<br>See sections 1-5. | 1-5 |
| A | QUALCOMM INCORPORATED. Channel access mechanism for Sidelink on Unlicensed Spectrum. R1-2207233, 3GPP TSG RAN WG1 #110. Toulouse, France. 13 August 2022.<br>See sections 1-2.6.2. | 1-5 |
| A | WO 2021-146683 A1 (OFINNO, LLC) 22 July 2021 (2021-07-22)<br>See paragraphs [0046]-[0303]; and figures 1A-30. | 1-5 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2024** | **04 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014629**

| Patent document cited in search report | | | Publication date (day/month/year) | Patent family member(s) | | | Publication date (day/month/year) |
|---|---|---|---|---|---|---|---|
| WO | 2022-086091 | A1 | 28 April 2022 | EP | 4186276 | A1 | 31 May 2023 |
| | | | | KR | 10-2023-0093265 | A | 27 June 2023 |
| | | | | US | 11805556 | B2 | 31 October 2023 |
| | | | | US | 2022-0132587 | A1 | 28 April 2022 |
| WO | 2021-146683 | A1 | 22 July 2021 | US | 2022-0312438 | A1 | 29 September 2022 |

Form PCT/ISA/210 (patent family annex) (July 2022)